# NEUE EUROPÄISCHE PATENTSCHRIFT

(11) **EP 3 668 766 B2**
(45) Veröffentlichungstag und Bekanntmachung des Hinweises auf die Entscheidung über den Einspruch: **08.10.2025**
(45) Hinweis auf die Patenterteilung: 21.07.2021
(21) Anmeldenummer: 18728600.0
(22) Anmeldetag: 29.05.2018
(51) Int. Cl.: B60T 13/40

(54) **ELEKTROPNEUMATISCHES ANHÄNGERVERSORGUNGSMODUL ZUM BEREITSTELLEN DES ANHÄNGERVERSORGUNGSDRUCKS**
ELECTRO PNEUMATIC FRAILER SUPPLY MODULE FOR PROVIDING A TRAILER PRESSURE
MODULE D'ALIMENTATION ÉLECTRO PNEUMATIQUE POUR FOURNIR UNE PRESSION À UN REMORQUE

(30) Priorität: 16.08.2017 DE 102017007781
(43) Veröffentlichungstag der Anmeldung: 24.06.2020
(73) Patentinhaber: ZF CV Systems Hannover GmbH, 30453 Hannover (DE)
(72) Erfinder: VAN THIEL, Julian, 30938 Grossburgwedel (DE)
(74) Vertreter: Eisenführ Speiser
(86) Internationale Anmeldenummer: PCT/EP2018/064069
(87) Internationale Veröffentlichungsnummer: WO 2019/034296

(56) Entgegenhaltungen:
- EP-B1- 3 371 017
- EP-B2- 1 785 325
- WO-A1-2015/154787
- WO-A1-2017/055015
- DE-B3- 102014 108 681
- US-A1- 2011 147 141

## Beschreibung

Die Erfindung betrifft ein elektropneumatisches Anhängerversorgungsmodul für ein elektropneumatisches Parkbremssystem für Nutzfahrzeuge, insbesondere Motorwagen-Anhängerkombinationen, mit einem Vorratsanschluss zum Anschließen eines Druckluftvorrats, und einem Anhängerversorgungsanschluss zum Übertragen eines Versorgungsdrucks für den Anhängerwagen.

Derartige elektropneumatische Anhängerversorgungsmodule werden dazu eingesetzt, von einem Druckluftvorrat in dem Motorwagen einen Versorgungsdruck für den Anhängerwagen bereitzustellen und zu übergeben. Ein solches elektropneumatisches Anhängerversorgungsmodul kann integriert sein oder neben einem sogenannten Anhängersteuerventil vorgesehen sein, über das ein Steuerdruck von dem Motorwagen an den Anhängerwagen übergeben wird. Während der Versorgungsdruck einen Volumenstrom zum Betätigen von Betriebsbremsen und/oder Federspeicherbremsen eines Anhängerwagens bereitstellt, wird über das Anhängersteuerventil nur ein Steuerdruck übergeben, der ein Bremsanforderungssignal repräsentiert.

Insbesondere im nordamerikanischen Raum sind entsprechende Anschlüsse an dem Motorwagen, das heißt Kupplungsköpfe, nicht mit einem Rückschlagventil versehen, sodass der Kupplungskopf für den Versorgungsdruck für den Anhängerwagen offen ist, und von dem Motorwagen nur dann Versorgungsdruck an diesem bereitgestellt werden sollte, wenn ein Anhängerwagen angeschlossen ist.

Um die pneumatische Verbindung zwischen dem Motorwagen und dem Anhängerwagen über den Kupplungskopf zu öffnen und somit Versorgungsdruck an dem Anhängerwagen bereitzustellen, ist es bekannt, ein handbetätigtes Schieberventil in der Kabine des Motorwagens vorzusehen, das durch den Fahrzeugführer nach Ankopplung des Anhängerwagens betätigt wird, um die Versorgung des Anhängerwagens mit Versorgungsdruck zu aktivieren und damit die Feststellbremse im Anhänger zu lösen.

Im Zuge der immer weitergehenden Automatisierung und Elektrifizierung von Fahrzeugen ist es allerdings wünschenswert, auch ein solches handbetätigtes Ventil durch elektrische oder elektropneumatische Komponenten zu ersetzen und insbesondere automatisch oder durch ein von einem Schalter in der Fahrerkabine ausgehendes Signal zu aktivieren.

Auch sind sogenannte Parkbremsmodule bekannt, die einen Steuerdruck an das Anhängersteuerventil (TCV) übergeben, um so die Betriebsbremsen des Anhängerwagens im geparkten Zustand einzubremsen, wenn Federspeicherbremsen des Motorwagens aktiviert sind. Ein solches Parkbremsmodul ist beispielsweise in EP 1 968 830 B1 bekannt. Das dort offenbarte Parkbremsmodul steuert den Druck der Federspeicherbremsen des Motorwagens über einen Anschluss an das Anhängersteuerventil aus, um die Betriebsbremsen des Anhängerwagens in Übereinstimmung mit den Federspeicherbremsen des Motorwagens zu aktivieren.

Ein ähnliches System ist aus EP 2 384 943 A2 bekannt, bei dem ebenfalls der Druck der Federspeicherbremsen übergeben wird. Weitere Systeme sind auch aus DE 10 2011 101 438 A1 sowie aus DE 10 2015 106 150 A1 bekannt.

Die US2011147141 A1 offenbart eine Ventileinrichtung für eine pneumatische Bremsanlage eines Nutzfahrzeugs, mit einem Steuerkolben, radialen Dichtungen und mindestens einem Ventilsitz, der in Bewegungsrichtung des Steuerkolbens verschiebbar ist.

Die WO2015154787A1 offenbart eine elektropneumatische Parkbremssteuereinrichtung zur Steuerung einer wenigstens einen Federspeicherbremszylinder beinhaltenden Feststellbremse, mit einem Anschluss für den wenigstens einen Federspeicherbremszylinder, einer mittels einer elektronischen Steuereinrichtung steuerbaren ersten Magnetventileinrichtung und einem Relaisventil.

Die DE102014108681B3 offenbart eine elektropneumatische Federspeicherbremseinrichtung eines Kraftfahrzeugs, welche Mittel zum Erzeugen von elektrischen Bremsbetätigungssignalen, eine die Bremsbetätigungssignale empfangende elektronische Steuereinrichtung, eine von der Steuerelektronik abhängig von den Betätigungssignalen gesteuerte elektropneumatische Ventileinrichtung sowie wenigstens einen pneumatisch betätigten Federspeicherbremszylinder beinhaltet.

Aufgabe der vorliegenden Erfindung ist es, ein elektropneumatisches Anhängersteuermodul für ein elektropneumatisches Parkbremssystem für Nutzfahrzeuge, insbesondere Motorwagen-Anhängerkombinationen, mit einem Vorratsanschluss zum Anschließen eines Druckluftvorrats und einem Anhängerversor gungsanschluss zum Übergeben eines Versorgungsdrucks für einen Anhängerwagen bereitzustellen, das auf einfache und elektronische Weise ein Freigeben und Bereitstellen des Versorgungsdrucks für den Anhängerwagen erlaubt und auch bei einem Abriss einer pneumatischen Leitung von dem Motorwagen an dem Anhängerversorgungsanschluss nicht zu einer vollständigen Entlüftung des entsprechenden Druckluftvorrats führt, sondern selbsttätig abschaltet.

Die Erfindung löst die Aufgabe bei einem elektropneumatischen Anhängerversorgungsmodul durch eine pneumatisch gesteuerte Hauptventileinheit zum Bereitstellen des Versorgungsdrucks am Anhängerversorgungsanschluss und einer pneumatischen Vorsteuereinheit zum Aussteuern wenigstens eines ersten Steuerdrucks an der pneumatisch gesteuerten Hauptventileinheit, wobei, wenn der erste Steuerdruck einen vorgegebenen ersten Schwellwert der pneumatisch gesteuerten Hauptventileinheit übersteigt, der Versorgungsdruck am Anhängerversorgungsanschluss aussteuerbar ist, und wenn der erste Steuerdruck den vorgegebenen ersten Schwellwert der pneumatisch gesteuerten Hauptventileinheit unterschreitet, der Anhängerversorgungsanschluss entlüftbar ist.

Auf diese Weise ist es durch Vorgeben des ersten Steuerdrucks möglich, den Versorgungsdruck am Anhängerversorgungsanschluss bereitzustellen oder diesen zu entlüften. Die elektropneumatische Vorsteuereinheit wird vorzugsweise basierend auf Signalen geschaltet, die das Ankuppeln eines Anhängerwagens repräsentieren und/oder von einem Fahrzeugführer manuell vorgegeben werden. Auch kann vorgesehen sein, dass ein entsprechender Steuerdruck zum Schalten der pneumatisch gesteuerten Hauptventileinheit nur dann bereitgestellt wird, wenn tatsächlich Bremsen, insbesondere Betriebsbremsen, des Anhängerwagens aktiviert werden müssen. Ferner ist es denkbar, das Starten des Motors des Motorwagens als einen Ausgangspunkt für ein entsprechendes Schaltsignal für die Vorsteuereinheit zu verwenden.

Die Vorsteuereinheit kann dabei so ausgebildet sein, dass, wenn der Motorwagen geparkt wird und die Vorsteuereinheit stromlos geschaltet wird, der Steuerdruck absinkt und der Anhängerversorgungsanschluss entlüftet wird. Auch der umgekehrte Fall ist denkbar, der dann bevorzugt ist, wenn Betriebsbremsen des Anhängerwagens als Parkbremsen genutzt werden sollen und so im abgestellten bzw. geparkten Zustand der Motorwagen-Anhängerkombination mit Druck versorgt werden müssen, um zugespannt zu bleiben.

Auch wenn offene Kupplungsköpfe für den Anhängerversorgungsanschluss in der Regel meist im nordamerikanischen Raum verwendet werden, soll verstanden werden, dass die vorliegende Erfindung auch in anderen Bereichen, wie insbesondere in Deutschland oder Europa, Anwendung finden kann. Auch für Kupplungsköpfe, die zusätzlich mit einem Rückschlagventil ausgestattet sind, ist ein derartiges elektropneumatisches Anhängerversorgungsmodul bevorzugt, um eine Leckage über das Rückschlagventil hinweg zu unterbinden.

Gemäß einer ersten bevorzugten Ausführungsform ist der von der pneumatisch gesteuerten Hauptventileinheit ausgesteuerte Versorgungsdruck als ein zweiter Steuerdruck an der pneumatisch gesteuerten Hauptventileinheit aussteuerbar, zum pneumatischen Halten des ausgesteuerten Versorgungsdrucks pA. Hierbei ist vorzugsweise vorgesehen, dass wenn der zweite Steuerdruck einen vorgegebenen zweien Schwellwert der pneumatisch gesteuerten Hauptventileinheit übersteigt, die Schaltstellung aufrechterhalten bleibt, und wenn der zweite Steuerdruck den vorgegebenen zweiten Schwellwert der pneumatisch gesteuerten Hauptventileinheit unterschreitet, die Hauptventileinheit schaltet und der Anhängerversorgungsanschluss entlüftbar ist. Durch diese Ausführungsform wird einerseits ermöglicht, dass, sobald der Versorgungsdruck ausgesteuert ist, dieser selbsttätig gehalten wird, indem der Versorgungsdruck als zweiter Steuerdruck rückgeführt wird, um die Hauptventileinheit in der Schaltstellung zu belassen, in der der Anhängerversorgungsanschluss mit dem Vorratsanschluss verbunden ist. In dieser Schaltstellung wird von dem Vorratsanschluss Versorgungsdruck an dem Anhängerversorgungsanschluss bereitgestellt, der dann wiederum für den Anhängerwagen an einem entsprechenden Kupplungskopf abgegriffen werden kann. Für den Fall, dass der Versorgungsdruck abfällt, weil beispielsweise eine Verbindung zwischen einem Kupplungskopf und einer entsprechenden pneumatischen Leitung gelöst wurde und der Versorgungsdruck nicht mehr vom Anhängerwagen empfangen, sondern in die Umgebung geleitet wird, fällt der Versorgungsdruck unter den zweiten Schwellwert, und die Hauptventileinheit schaltet, wobei der Anhängerversorgungsanschluss entlüftet wird. Das heißt, in der geschalteten Stellung der Hauptventileinheit wird dann der Anhängerversorgungsanschluss mit einer Entlüftung verbunden, wobei gleichzeitig vorzugsweise der Vorratsanschluss des elektropneumatischen Anhängerversorgungsmoduls abgesperrt wird. Hierdurch wird erreicht, dass bei Abriss einer pneumatischen Verbindung zwischen dem Versorgungsanschluss und dem Anhängerwagen der Druckluftvorrat, der an den Vorratsanschluss anschließbar ist, nicht in die Umgebung entlüftet wird, sondern eine Absperrung stattfindet.

Um dies zu erreichen, weist das elektropneumatische Anhängerversorgungsmodul eine Rückführleitung auf, die dazu vorgesehen ist, den von der pneumatisch gesteuerten Hauptventileinheit ausgesteuerten Versorgungsdruck als zweiten Steuerdruck an der pneumatisch gesteuerten Hauptventileinheit auszusteuern. Diese Rückführleitung kann direkt aus der Hauptventileinheit herausgeführt werden und als Rückführung (Feedback) den ausgesteuerten Versorgungsdruck an dem pneumatischen Steuereingang bereitstellen. Die Rückführleitung kann aber auch von einem Abschnitt nahe des Anhängerversorgungsanschlusses abzweigen oder an einer anderen beliebigen Stelle.

Es ist offenbart, aber nicht Teil der Erfindung, dass die Rückführleitung intern in der Hauptventileinheit selbst vorgesehen ist. Für diesen Fall kann die Rückführleitung direkt ohne Zwischenschaltung eines Ventils zum pneumatischen Steuereingang der Hauptventileinheit verlaufen. Vorzugsweise ist hierbei eine Drossel in der Rückführleitung vorgesehen, um ein unbeabsichtigtes Schalten der Hauptventileinheit aufgrund leichter Druckschwankungen zu verhindern und den Wechsel der Schaltstellung zu ermöglichen. Ein Vorteil hierbei liegt darin, dass die elektropneumatische Vorsteuereinheit einfacher ausgebildet sein kann, beispielsweise nur ein zwei 2/2-Wege-Ventilen bestehen.

Erfindungsgemäß ist die Rückführleitung mit der elektropneumatischen Vorsteuereinheit verbunden, wobei die elektropneumatische Vorsteuereinheit in einer stromlosen Schaltstellung das Aussteuern des zweiten Steuerdrucks an der pneumatisch gesteuerten Hauptventileinheit erlaubt. In einer bestromten Schaltstellung der elektropneumatischen Vorsteuereinheit wird hingegen vorzugsweise der zweite Steuerdruck ausgesperrt.

Bei der Aussteuerung der ersten und zweiten Steuerdrücke an die Hauptventileinheit ist es in einer Variante bevorzugt, dass die ersten und zweiten Steuerdrücke einer gemeinsamen Steuerfläche der pneumatisch gesteuerten Hauptventileinheit zugeordnet sind. Die ersten und zweiten Steuerdrücke können beispielsweise in eine einzigen Steuereingang der Hauptventileinheit eingesteuert werden oder über zwei separate Steuereingänge in eine Steuerkammer, die durch einen Kolben begrenzt ist, der eine Steuerfläche aufweist, auf die in diesem Fall sowohl der erste als auch der zweite Steuerdruck einwirken. Für diesen Fall entspricht der erste Schwellwert dem zweiten Schwellwert. Um zwei verschiedene Schwellwerte für den ersten und zweiten Steuerdruck umzusetzen, ist es erforderlich, zwei separate Steuerflächen zu nutzen oder über andere Kolbenkonstruktionen ein unterschiedliches Übersetzungsverhältnis für die ersten und zweiten Steuerdrücke, die dann über separate Steuereingänge an der Hauptventileinheit bereitgestellt werden, zu verwenden. Auch ist es möglich, eine einzige Steuerfläche für die beiden Steuerdrücke zu verwenden, wobei die ersten und zweiten Steuerdrücke verschiedenartig gedrosselt bereitgestellt werden. Auch auf diese Weise sind unterschiedliche Schwellwerte erzielbar. Gemäß einer weiteren bevorzugten Ausführungsform weist die pneumatisch gesteuerte Hauptventileinheit ein 3/2-Wege-Ventil auf, mit einem mit dem Vorratsanschluss verbundenen ersten Hauptventilanschluss, einem mit dem Anhängerversorgungsanschluss verbundenen zweiten Hauptventilanschluss, einem mit der Entlüftung verbundenen dritten Hauptventilanschluss und einem mit der Vorsteuereinheit verbundenen ersten Steueranschluss, an dem der erste Steuerdruck aussteuerbar ist. Das als 3/2-Wege-Ventil ausgebildete Hauptventil weist vorzugsweise eine erste Schaltstellung auf, in der der zweite Hauptventilanschluss mit dem dritten Hauptventilanschluss verbunden ist und so der Anhängerversorgungsanschluss mit der Entlüftung verbunden ist und entlüftbar ist. In einer zweiten Schaltstellung des als 3/2-Wege-Ventil ausgebildeten Hauptventils ist vorzugsweise der zweite Hauptventilanschluss mit dem ersten Hauptventilanschluss verbunden und somit der Anhängerversorgungsanschluss mit dem Vorratsanschluss verbunden. In dieser Schaltstellung ist also von dem Vorratsanschluss der Vorratsdruck an den Anhängerversorgungsanschluss aussteuerbar, an dem dann der Versorgungsdruck bereitgestellt wird. Vorzugsweise ist vorgesehen, dass das Hauptventil in der ersten Schaltstellung ist, wenn der erste Steuerdruck und/oder der zweite Steuerdruck den ersten bzw. zweiten Schwellwert unterschreiten.

Bevorzugt ist vorgesehen, dass auch der zweite Steuerdruck an dem ersten Steueranschluss aussteuerbar ist oder das Hauptventil einen zweiten Steueranschluss aufweist, an dem der zweite Steuerdruck aussteuerbar ist. Hierbei ist vorzugsweise vorgesehen, dass, wenn der erste und/oder zweite Steuerdruck unterhalb des ersten bzw. zweiten Schwellwerts liegt, das Hauptventil in der ersten Schaltstellung ist und wenn der erste und/oder zweite Steuerdruck oberhalb des ersten bzw. zweiten Schwellwerts liegt, das Hauptventil in der zweiten Schaltstellung ist. Vorzugsweise besteht die Hauptventileinheit aus dem Hauptventil. Das heißt, neben dem Hauptventil sind vorzugsweise keine anderen Ventile in der Hauptventileinheit vorgesehen. Hierdurch wird das elektropneumatische Anhängerversorgungsmodul noch einfacher gestaltet, und weniger Bauteile können verwendet werden.

Bei einer nicht erfindungsgemäßen direkten Rückführung der Rückführleitung ist diese vorzugsweise direkt mit dem ersten Steueranschluss oder dem zweiten Steueranschluss verbunden, falls es einen solchen zweiten Steueranschluss gibt. Ein Ventil, etwa ein Ventil der elektropneumatischen Vorsteuereinheit, ist in diesem Fall nicht zwischen die Rückführleitung den ersten bzw. zweiten Steueranschluss geschaltet; vielmehr wird der zweite Steuerdruck an dem ersten bzw. zweiten Steueranschluss ausgesteuert, sobald der Versorgungsdruck ausgesteuert wird.

Gemäß einer weiteren bevorzugten Ausführungsform ist vorgesehen, dass die elektropneumatische Vorsteuereinheit ein Einlassventil und ein Auslassventil aufweist. Über das Einlassventil ist die elektropneumatische Vorsteuereinheit vorzugsweise mit dem Vorratsanschluss verbindbar, und über das Auslassventil ist die elektropneumatische Vorsteuereinheit vorzugsweise mit einer Entlüftung verbindbar.

Vorzugsweise ist das Einlassventil einem Einlasskreis zugeordnet und das Auslassventil einem Auslasskreis, wobei der Einlasskreis und der Auslasskreis pneumatisch verbunden sind. In diesem Fall reicht es aus, dass die Hauptventileinheit nur einen Steueranschluss, den ersten Steueranschluss, für beide, die ersten und zweiten Steuerdrücke aufweist, da der Einlasskreis und der Auslasskreis verbunden sind. Der Einlasskreis kann folglich über den Auslasskreis mit entlüftet werden oder umgekehrt.

In einer Variante hierzu ist vorgesehen, dass das Einlassventil einem Einlasskreis zugeordnet ist und das Auslassventil einem Auslasskreis zugeordnet ist, wobei der Einlasskreis und der Auslasskreis getrennt sind. In diesem Fall ist es bevorzugt, dass die Hauptventileinheit neben dem ersten Steueranschluss auch den zweiten Steueranschluss aufweist, sodass der Einlasskreis und der Auslasskreis vollständig trennbar sind. Hierdurch kann eine weitere unabhängige Steuerung erreicht werden, auch wenn die Schaltung etwas aufwändiger ist.

Gemäß einer weiteren bevorzugten Ausgestaltung der Erfindung ist das Einlassventil als 2/2-Wege-Einlassventil ausgebildet. Insbesondere für den Fall, dass die Einlass- und Auslasskreise verbunden sind, kann der Einlasskreis über den Auslasskreis mit entlüftet werden, sodass der Einlasskreis keine eigene separate Entlüftung benötigt. Für den Fall, dass Einlass- und Auslasskreis getrennt sind, benötigt der Einlasskreis eine separate Entlüftung, und das Einlassventil ist vorzugsweise als 3/2-Wege-Einlassventil ausgebildet. Wenn die Einlass- und Auslasskreise verbunden sind, kann dieses 3/2-Wege-Einlassventil durch ein 2/2-Wege-Einlassventil ersetzt werden, wodurch die Schaltung insgesamt vereinfacht wird.

Vorzugsweise weist das 2/2-Wege-Einlassventil einen mit dem Vorratsanschluss verbundenen ersten 2/2-Wege-Einlassventilanschluss und einen mit der pneumatisch gesteuerten Hauptventileinheit verbundenen zweiten 2/2-Wege-Einlassventilanschluss auf. Der zweite 2/2-Wege-Einlassventilanschluss ist vorzugsweise mit dem ersten Steueranschluss des Hauptventils verbunden. Das 2/2-Wege-Einlassventil weist eine erste und eine zweite Schaltstellung auf, wobei in der ersten Schaltstellung vorzugsweise der erste und zweite 2/2-Wege-Einlassventilanschluss getrennt sind und in der zweiten Schaltstellung der erste 2/2-Wege-Einlassventilanschluss mit dem zweiten 2/2-Wege-Einlassventilanschluss verbunden ist. Das 2/2-Wege-Einlassventil ist vorzugsweise elektropneumatisch schaltbar und monostabil in der ersten Schaltstellung.

In einer Variante, die oben bereits kurz beschrieben wurde, ist das Einlassventil als 3/2-Wege-Einlassventil ausgebildet. Dies ist dann besonders bevorzugt, wenn der Einlasskreis und der Auslasskreis pneumatisch getrennt sind. Hierbei weist das 3/2-Wege-Einlassventil vorzugsweise einen mit dem Vorratsanschluss verbundenen ersten 3/2-Wege-Einlassventilanschluss, einen mit der Hauptventileinheit verbundenen zweiten 3/2-Wege-Einlassventilanschluss und einen mit einer Entlüftung verbundenen dritten 3/2-Wege-Einlassventilanschluss auf. Der zweite 3/2-Wege-Einlassventilanschluss ist vorzugsweise mit dem ersten Steueranschluss verbunden. Über den zweiten 3/2-Wege-Einlassventilanschluss wird also vorzugsweise der erste Steuerdruck ausgesteuert und dann an der Hauptventileinheit, insbesondere dem ersten Steueranschluss bereitgestellt. Das 3/2-Wege-Einlassventil weist vorzugsweise eine erste und eine zweite Schaltstellung auf, wobei in der ersten Schaltstellung des 3/2-Wege-Einlassventils der zweite 3/2-Wege-Einlassventilanschluss mit dem dritten 3/2-Wege-Einlassventilanschluss verbunden ist und der zweite 3/2-Wege-Einlassventilanschluss folglich in dieser Stellung entlüftet wird. Mithin wird auch der erste Steueranschluss entlüftet, sodass die Hauptventileinheit ebenfalls in die Entlüftungsstellung schaltet, sofern auch der zweite Steuerdruck unterhalb des zweiten Schwellwerts liegt. In der zweiten Schaltstellung des 3/2-Wege-Einlassventils ist vorzugsweise der erste 3/2-Wege-Einlassventilanschluss mit dem zweiten 3/2-Wege-Einlassventilanschluss verbunden, sodass der erste Steueranschluss belüftet wird und der erste Steuerdruck an dem ersten Steueranschluss ausgesteuert wird. Überschreitet dieser den ersten Schwellwert, schaltet die Hauptventileinheit in die zweite Schaltstellung, sodass der Versorgungsdruck an dem Anhängerversorgungsanschluss ausgesteuert wird.

In einer bevorzugten Weiterbildung ist vorgesehen, dass das Auslassventil als 2/2-Wege-Auslassventil ausgebildet ist. Vorzugsweise weist das 2/2-Wege-Auslassventil einen mit der Hauptventileinheit verbundenen ersten 2/2-Wege-Auslassventilanschluss und einen mit einer Entlüftung verbundenen zweiten 2/2-Wege-Auslassventilanschluss auf. Vorzugsweise ist vorgesehen, dass das 2/2-Wege-Auslassventil stromlos in einer ersten geschlossenen Schaltstellung und bestromt in einer zweiten offenen Schaltstellung ist. Vorzugsweise ist der erste 2/2-Wege-Auslassventilanschluss mit dem ersten oder zweiten Steueranschluss der Hauptventileinheit verbunden. Durch Schalten des 2/2-Wege-Auslassventils kann folglich der erste oder zweite Steueranschluss der Hauptventileinheit entlüftet werden. Diese Variante ist besonders bevorzugt wenn das Einlassventil als 3/2-Wege-Einlassventil ausgebildet ist, oder das Einlassventil als 2/2-Wege-Einlassventil ausgebildet ist und die Rückführleitung direkt mit dem ersten oder zweiten Steueranschluss gegebenenfalls unter Verwendung einer Drossel verbunden ist.

In einer bevorzugten Weiterbildung ist vorgesehen, dass das Auslassventil als 3/2-Wege-Auslassventil ausgebildet ist. Vorzugsweise weist das 3/2-Wege-Auslassventil einen mit einer Entlüftung verbundenen ersten 3/2-Wege-Auslassventilanschluss, einen mit der Hauptventileinheit verbundenen zweiten 3/2-Wege-Auslassventilanschluss und einen mit dem Anhängerversorgungsanschluss verbundenen dritten 3/2-Wege-Auslassventilanschluss auf. Vorzugsweise ist vorgesehen, dass in einer ersten Schaltstellung des 3/2-Wege-Auslassventils der dritte 3/2-Wege-Auslassventilanschluss mit dem zweiten 3/2-Wege-Auslassventilanschluss verbunden ist und folglich an dem zweiten 3/2-Wege-Auslassventilanschluss der Versorgungsdruck ausgesteuert wird. Dieser wird dann von dem zweiten 3/2-Wege-Auslassventilanschluss an der Hauptventileinheit ausgesteuert, vorzugsweise als zweiter Steuerdruck. Zu diesem Zweck ist der zweite 3/2-Wege-Auslassventilanschluss vorzugsweise mit dem zweiten Steueranschluss oder, wenn ein gemeinsamer Steueranschluss vorgesehen ist, mit dem ersten Steueranschluss der Hauptventileinheit verbunden. In der zweiten Schaltstellung des 3/2-Wege-Auslassventils ist vorzugsweise der erste 3/2-Wege-Auslassventilanschluss mit dem zweiten 3/2-Wege-Auslassventilanschluss verbunden, sodass der zweite 3/2-Wege-Auslassventilanschluss entlüftet werden kann. In diesem Fall wird auch kein zweiter Steuerdruck ausgesteuert, sondern der zweite Steueranschluss entlüftet, für den Fall, dass ein zweiter Steueranschluss vorgesehen ist. Anderenfalls wird der erste Steueranschluss entlüftet, wenn sowohl der erste als auch der zweite Steuerdruck an dem ersten Steueranschluss ausgesteuert werden.

In einer bevorzugten Weiterbildung ist vorgesehen, dass der zweite 2/2-Wege-Einlassventilanschluss oder der zweite 3/2-Wege-Einlassventilanschluss und der zweite 3/2-Wege-Auslassventilanschluss oder der erster 2/2-Wege-Auslassventilanschluss mit einer gemeinsamen Steuerleitung verbunden sind, die ihrerseits mit der Hauptventileinheit verbunden ist, um sowohl den ersten als auch den zweiten Steuerdruck an der Hauptventileinheit auszusteuern. Es ist denkbar, dass, um ein Übersteuern zu vermeiden, ein Select-High-Ventil vorgesehen ist, sodass jeweils nur der erste oder der zweite Steuerdruck an dem Steueranschluss aussteuerbar sind. In diesem Fall ist vorzugsweise auch eine gemeinsame Steuerfläche an einem internen Steuerkolben der Hauptventileinheit für sowohl den ersten als auch den zweiten Steuerdruck vorgesehen.

Gemäß einer weiteren bevorzugten Ausführungsform weist das elektropneumatische Anhängerversorgungsmodul eine elektronische Steuereinheit mit einem elektrischen Anschluss zum Empfang von Anhängerkopplungssignalen und/oder zum Bereitstellen entsprechender Schaltsignale wenigstens an die Vorsteuereinheit auf. Der elektrische Anschluss zum Empfang von Anhängerkopplungssignalen kann beispielsweise mit einem Fahrzeugbus (CAN-Bus) zum Empfang einer externen Anhängerparkbremsanforderung verbunden sein oder direkt über eine Verkabelung mit einem entsprechenden Anhängerparkbremsschalter in der Fahrerkabine des Fahrzeugs oder außerhalb des Fahrzeugs verbunden sein.

Ferner ist bevorzugt, dass das elektropneumatische Anhängerversorgungsmodul einen Drucksensor aufweist, der dazu vorgesehen ist, den Versorgungsdruck zu erfassen und ein entsprechendes Drucksignal bereitstellen. Vorzugsweise stellt der Drucksensor das Drucksignal an der elektronischen Steuereinheit bereit. Die elektronische Steuereinheit kann das Drucksignal an einen Fahrzeugbus oder dergleichen übergeben oder selbstständig verarbeiten. Über das von dem Drucksensor erfasste Drucksignal kann ermittelt werden, ob ein Versorgungsdruck ausgesteuert ist oder der Anhängerversorgungsanschluss drucklos ist.

Vorzugsweise ist das Drucksignal für eine elektropneumatische Anhängererkennung und/oder einer Plausibilisierung einer weiteren Anhängererkennung vorgesehen. Hierbei kann das Drucksignal dann durch die elektronische Steuereinheit oder eine übergeordnete Steuereinheit empfangen werden und basierend auf dem empfangenen Drucksignal ermittelt werden, ob ein Anhänger angeschlossen ist. Lässt sich am Anhängerversorgungsanschluss kein Druck aufbauen, oder geht die Hauptventileinheit nicht in die pneumatische Selbsthaltung über, ist dies ein Zeichen dafür, dass kein Anhänger angeschlossen ist, sondern der Anhängerversorgungsanschluss mit der Umgebung verbunden ist. Auf dieselbe Weise kann das Drucksignal verwendet werden eine weitere Anhängererkennung, beispielsweise eine elektronische, zu plausibilisieren. Zu diesem Zweck werden vorzugsweise die Vorsteuereinheit und/oder die Hauptventileinheit so geschaltet, dass ein Druckimpuls an dem Anhängerversorgungsanschluss ausgesteuert wird. Der Druckimpuls wird vorzugsweise nur für einen kurzen vorbestimmten Zeitraum von wenigen Sekunden ausgesteuert, um bei Verbindung des Anhängerversorgungsanschluss mit der Umgebung nicht unnötig den Vorrat zu entlüften.

In einem zweiten Aspekt löst die Erfindung die eingangs genannte Aufgabe durch ein elektropneumatisches Feststellbremsmodul mit einer Feststellbremseinheit, wenigstens einem Federspeicheranschluss zum Anschließen wenigstens eines Federspeicherbremszylinders und einem elektropneumatischen Anhängerversorgungsmodul nach einer der vorstehend beschriebenen bevorzugten Ausführungsformen eines elektropneumatischen Anhängerversorgungsmoduls gemäß dem ersten Aspekt der Erfindung, wobei die Feststellbremseinheit Vorratsdruck von dem Vorratsanschluss des elektropneumatischen Anhängerversorgungsmoduls empfängt. Auf diese Weise sind ein elektropneumatisches Feststellbremsmodul und ein elektropneumatisches Anhängerversorgungsmodul integriert. Vorzugsweise sind die beiden Module auch in einem gemeinsamen Gehäuse untergebracht.

Weiterhin ist bevorzugt, dass das elektropneumatische Feststellbremsmodul nach dem vorstehenden Aspekt eine Anhängersteuereinheit aufweist, mit einem Anhängersteueranschluss zum Aussteuern eines Anhängersteuerdrucks, der dazu vorgesehen ist, ein Betätigen von Betriebsbremsen des Anhängerwagens zu bewirken, wobei die Anhängersteuereinheit Vorratsdruck von dem Vorratsanschluss empfängt sowie den Versorgungsdruck als dritten Steuerdruck empfängt. Vorzugsweise ist hierbei vorgesehen, dass die Anhängersteuereinheit nur dann einen Anhängersteuerdruck aussteuert, wenn der dritte Steuerdruck einen dritten Schwellwert übersteigt. Hierdurch wird sichergestellt, dass Anhängersteuerdruck nur dann ausgesteuert wird, wenn auch ein Versorgungsdruck bereitgestellt ist, also ein Anhängersteuerdruck nur dann ausgesteuert wird, wenn Betriebsbremsen des Anhängerwagens tatsächlich eingelegt werden können.

Für weitere bevorzugte Ausführungsformen wird auf die obige Beschreibung zum ersten Aspekt der Erfindung vollständig Bezug genommen. Es soll verstanden werden, dass das elektropneumatische Anhängerversorgungsmodul gemäß dem ersten Aspekt der Erfindung und das elektropneumatische Feststellbremsmodul gemäß dem zweiten Aspekt der Erfindung gleiche und ähnliche Unteraspekte haben, wie sie insbesondere in den abhängigen Ansprüchen niedergelegt sind.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1 ein Blockschaltbild eines elektropneumatischen Anhängerversorgungsmoduls in einem ersten Ausführungsbeispiel;
- Fig. 2 ein Blockschaltbild eines elektropneumatischen Anhängerversorgungsmoduls gemäß einem zweiten Ausführungsbeispiel;
- Fig. 3 ein Blockschaltbild eines elektropneumatischen Anhängerversorgungsmoduls gemäß einem dritten Ausführungsbeispiel;
- Fig. 4 ein nicht erfindungsgemäßes Blockschaltbild eines elektropneumatischen Anhängerversorgungsmoduls;
- Fig. 5 ein Blockschaltbild eines elektropneumatischen Feststellbremsmoduls gemäß einem ersten Ausführungsbeispiel;
- Fig. 6 ein Blockschaltbild eines elektropneumatischen Feststellbremsmoduls in einem zweiten Ausführungsbeispiel; und
- Fig. 7 ein Blockschaltbild eines elektropneumatischen Feststellbremsmoduls in einem dritten Ausführungsbeispiel.

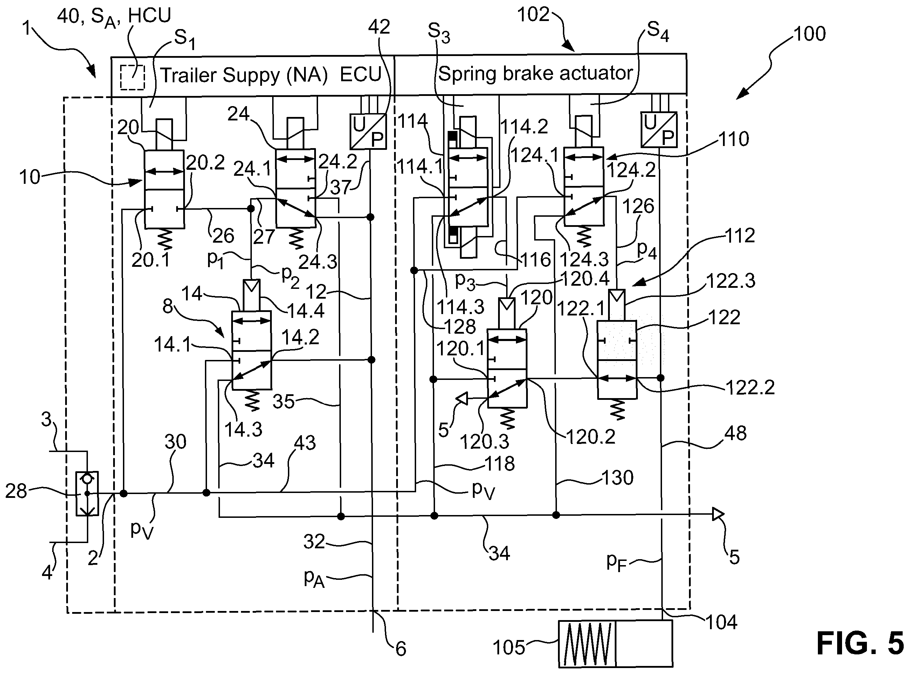

Ein elektropneumatisches Anhängerversorgungsmodul 1 gemäß der Erfindung dient dazu, einen Versorgungsdruck für einen Anhängerwagen einer Motorwagen-Anhängerkombination ausgehend vom Motorwagen an einem Kupplungskopf ("roter Kupplungskopf") bereitzustellen. Das elektropneumatische Anhängerversorgungsmodul 1 gemäß der Erfindung kann als separates Modul oder als Teil einer Moduleinheit eingesetzt werden, wie insbesondere einer elektropneumatischen Feststellbremseinheit (vgl. Fig. 5 - 7), eines kombinierten Achsmodulators, eines Anhängersteuerventils oder dergleichen.

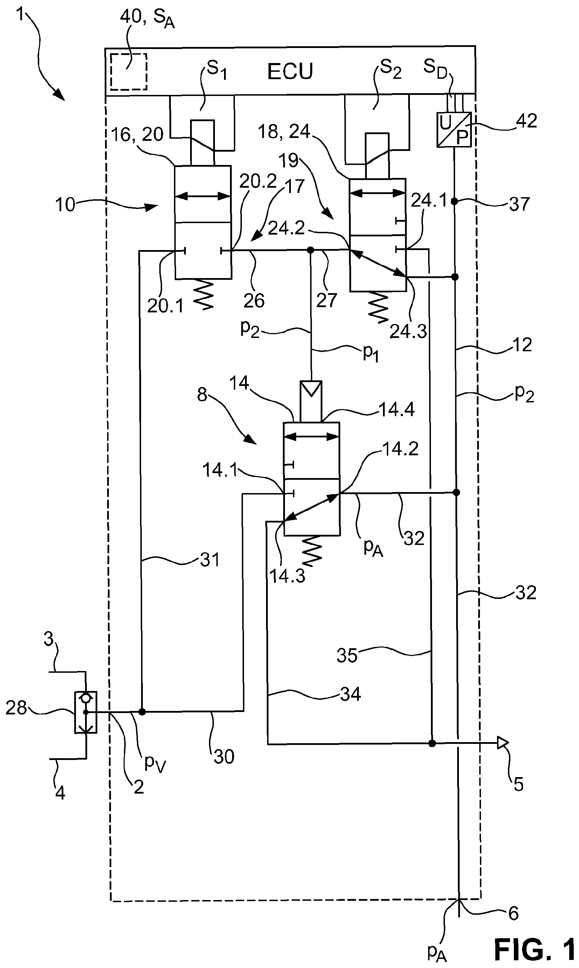

Das elektropneumatische Anhängerversorgungsmodul 1 (Figur 1) weist einen Vorratsanschluss 2 auf, an den gemäß diesem Ausführungsbeispiel ein erster Druckluftvorrat 3 und ein zweiter Druckluftvorrat 4 angeschlossen sind. Der erste und zweite Druckluftvorrat 3, 4 sind über ein Select-High-Ventil 28 an den Vorratsanschluss 2 angeschlossen, sodass jeweils der höhere der beiden von den ersten und zweiten Druckluftvorräten 3, 4 bereitgestellten Drücke an dem Vorratsanschluss als Vorratsdruck pV bereitgestellt wird.

Von dem Vorratsanschluss 2 ausgehend verläuft eine erste Vorratsdruckleitung 30, von der eine zweite Vorratsdruckleitung 31 abzweigt. Während die erste Vorratsdruckleitung 30 zu einer Hauptventileinheit 8 verläuft und die Hauptventileinheit 8 mit Versorgungsdruck pV versorgt, verläuft die zweite Vorratsdruckleitung 31 zu einer elektropneumatischen Vorsteuereinheit 10 und versorgt diese mit Vorratsdruck pV.

Die Hauptventileinheit 8 ist pneumatisch gesteuert und dient zum Bereitstellen eines Versorgungsdrucks pA an einem Anhängerversorgungsanschluss 6. An den Anhängerversorgungsanschluss 6 kann eine pneumatische Leitung für den roten Kupplungskopf angeschlossen werden. Die Vorsteuereinheit 10 stellt einen ersten Steuerdruck p1 an der pneumatisch gesteuerten Hauptventileinheit 8 bereit, um die pneumatisch gesteuerte Hauptventileinheit 8 zu schalten. Dazu weist die pneumatisch gesteuerte Hauptventileinheit 8 einen ersten Schwellwert auf, wobei die pneumatisch gesteuerte Hauptventileinheit 8 von einer ersten in Fig. 1 gezeigten Schaltstellung geschaltet in eine zweite in Fig. 1 nicht gezeigte Schaltstellung geschaltet wird, wenn der erste Steuerdruck p1 den vorgegebenen ersten Schwellwert überschreitet. Durch Schalten der pneumatisch gesteuerten Hauptventileinheit in die zweite in Fig. 1 nicht gezeigte Schaltstellung wird der Vorratsanschluss 2 über die Hauptventileinheit 8 mit dem Anhängerversorgungsanschluss verbunden, sodass der Versorgungsdruck pA an dem Anhängerversorgungsanschluss 6 ausgesteuert wird. Unterschreitet der erste Steuerdruck den ersten Schwellwert, ist vorzugsweise vorgesehen, dass die Hauptventileinheit 8 in der ersten in Fig. 1 gezeigten Schaltstellung ist und der Anhängerversorgungsanschluss 6 mit einer Entlüftung 5 verbunden ist.

Im Einzelnen besteht die Hauptventileinheit 8 gemäß diesem Ausführungsbeispiel (Fig. 1) aus einem Hauptventil 14, das als pneumatisch gesteuertes 3/2-Wege-Ventil ausgebildet ist. Das Hauptventil 14 weist einen ersten Hauptventilanschluss 14.1, einen zweiten Hauptventilanschluss 14.2 und einen dritten Hauptventilanschluss 14.3 auf. Der erste Hauptventilanschluss 14.1 ist mit der ersten Vorratsdruckleitung 30 verbunden, und der zweite Hauptventilanschluss 14.2 ist mit einer Versorgungsdruckleitung 32 verbunden. Der dritte Hauptventilanschluss 14.3 ist seinerseits mit einer ersten Entlüftungsleitung 34 verbunden, die zu der Entlüftung 5 führt.

Die Vorsteuereinheit 10 weist gemäß diesem Ausführungsbeispiel ein Einlassventil 16 sowie ein Auslassventil 18 auf. Das Einlassventil 16 ist über die zweite Vorratsdruckleitung 31 mit dem Vorratsanschluss 2 verbunden, das Auslassventil 18 ist über eine zweite Entlüftungsleitung 35 zunächst mit der ersten Entlüftungsleitung 34 und so mit der Entlüftung 5 verbunden. Über das Einlassventil 16 lässt sich der erste Steuerdruck p1 in einer ersten Steuerleitung 26 aussteuern, die mit einem ersten Steueranschluss 14.4 der Hauptventileinheit 8, genauer gesagt mit dem ersten Steueranschluss 14.4 des Hauptventils 14 verbunden ist. Über das Auslassventil 18 lässt sich die erste Steuerleitung 26 in diesem Ausführungsbeispiel (Fig. 1) entlüften.

Das Einlassventil 16 definiert also einen Einlasskreis 17, und das Auslassventil 18 definiert einen Auslasskreis 19. Einlass- und Auslasskreis 17, 19 sind in diesem Ausführungsbeispiel verbunden, nämlich über die erste Steuerleitung 26, die in diesem Ausführungsbeispiel auch als gemeinsame Steuerleitung 26 bezeichnet wird. Im Einzelnen ist gemäß diesem Ausführungsbeispiel (Fig. 1) das Einlassventil 16 als 2/2-Wege-Einlassventil 20 ausgebildet und weist einen ersten 2/2-Wege-Einlassventilanschluss 20.1 und einen zweiten 2/2-Wege-Einlassventilanschluss 20.2 auf. Der erste 2/2-Wege-Einlassventilanschluss 20.1 ist mit der zweiten Vorratsdruckleitung 31 verbunden, und der zweite 2/2-Wege-Einlassventilanschluss 20.2 ist mit der ersten Steuerleitung 26 verbunden. Das 2/2-Wege-Einlassventil 20 ist als elektropneumatisch schaltbares Einlassventil ausgebildet und weist eine erste in Fig. 1 gezeigte Schaltstellung und eine zweite in Fig. 1 nicht gezeigte Schaltstellung auf. Während in der ersten in Fig. 1 gezeigten Schaltstellung der erste 2/2-Wege-Einlassventilanschluss 20.1 und der zweite 2/2-Wege-Einlassventilanschluss 20.2 getrennt sind, ist in der zweiten in Fig. 1 nicht gezeigten Schaltstellung eine Verbindung zwischen dem ersten 2/2-Wege-Einlassventilanschluss 20.1 und dem zweiten 2/2-Wege-Einlassventilanschluss 20.2 hergestellt. Stromlos ist das 2/2-Wege-Einlassventil 20 in der ersten in Fig. 1 gezeigten Schaltstellung. Das heißt, stromlos wird kein Steuerdruck p1 ausgesteuert.

Das Auslassventil 18 ist in dieser konkreten Ausführungsform (Fig. 1) als 3/2-Wege-Auslassventil 24 ausgebildet. Es weist einen ersten 3/2-Wege-Auslassventilanschluss 24.1, einen zweiten 3/2-Wege-Auslassventilanschluss 24.2 und einen dritten 3/2-Wege-Auslassventilanschluss 24.3 auf. In der in Fig. 1 gezeigten ersten Schaltstellung ist der zweite 3/2-Wege-Auslassventilanschluss 24.2 mit dem dritten 3/2-Wege-Auslassventilanschluss 24.3 verbunden. In einer zweiten in Fig. 1 nicht gezeigten Schaltstellung ist hingegen der zweite 3/2-Wege-Auslassventilanschluss 24.2 mit dem ersten 3/2-Wege-Auslassventilanschluss 24.1 verbunden. Der erste 3/2-Wege-Auslassventilanschluss 24.1 ist mit der zweiten Entlüftungsleitung 35 verbunden. Der zweite 3/2-Wege-Auslassventilanschluss 24.2 ist mit einer zweiten Steuerleitung 27 verbunden, die gemäß diesem Ausführungsbeispiel (Fig. 1) in die erste Steuerleitung 26 mündet. Hierzu ist eine Verbindungsstelle 36 zwischen der ersten Steuerleitung 26 und der zweiten Steuerleitung 27 vorgesehen, wodurch auch der Einlasskreis 17 und der Auslasskreis 19 pneumatisch verbunden sind. Der dritte 3/2-Wege-Auslassventilanschluss 24.3 ist mit einer Rückführleitung 12 verbunden, die von der Versorgungsdruckleitung 32 abzweigt. Die Rückführleitung 12 ist als Steuerleitung ausgebildet und greift den Versorgungsdruck pA als zweiten Steuerdruck p2 ab.

In der in Fig. 1 gezeigten ersten Schaltstellung des 3/2-Wege-Auslassventils 24 wird folglich der Versorgungsdruck pA als zweiter Steuerdruck p2 in die zweite Steuerleitung 27 und somit auch in die erste Steuerleitung 26 und schließlich am ersten Steueranschluss 14.4 des Hauptventils 14 ausgesteuert. In der zweiten in Fig. 1 nicht gezeigten Schaltstellung des 3/2-Wege-Auslassventils 18 hingegen wird die zweite Steuerleitung 27 mit der Entlüftung 5 verbunden und auf diese Weise entlüftet, wodurch auch die erste Steuerleitung 26 und der erste Steueranschluss 14.4 entlüftet werden. Der Einlasskreis 17 kann also aufgrund der Verbindungsstelle 36 über das Auslassventil 18 mit entlüftet werden.

Zum Bereitstellen von entsprechenden ersten und zweiten Schaltsignalen S1, S2 weist das elektropneumatische Anhängerversorgungsmodul 1 gemäß diesem Ausführungsbeispiel (Fig. 1) weiterhin eine elektronische Steuereinheit ECU auf. Die elektronische Steuereinheit ECU kann eine separate, für das elektropneumatische Anhängerversorgungsmodul 1 vorgesehene Steuereinheit sein, sie kann aber ebenso in einem übergeordneten Steuergerät untergebracht sein, und die ersten und zweiten Schaltsignale S1, S2 werden durch eine direkte Verkabelung von einer übergeordneten Steuereinheit bereitgestellt. In diesem Ausführungsbeispiel weist die elektronische Steuereinheit ECU einen elektrischen Anschluss 40 auf, über den Anhängerkopplungssignale SA, beispielsweise von einem Anhängerparkbremsschalter und/oder gegebenenfalls externe Anhängerparkbremsanforderung über CAN-Bus, bereitgestellt werden können. Ein Anhängerkopplungssignal SA gibt an, wann ein Anhänger an den Motorwagen angekoppelt ist, insbesondere, wenn ein Verbraucher an den roten Kupplungskopf angeschlossen ist und somit ein Versorgungsdruck pA bereitgestellt werden kann und soll. Ein solches Anhängerkopplungssignal SA kann auch von einem manuell zu betätigenden Schalter, der in der Fahrerkabine oder anderer Stelle an dem Motorwagen angeordnet ist, bereitgestellt werden.

Durch Bestromung des 2/2-Wege-Einlassventils 20 wird dieses von der ersten in Fig. 1 gezeigten Schaltstellung in die zweite in Fig. 1 nicht gezeigte Schaltstellung verbracht. In entsprechender Weise wird durch Bestromung des 3/2-Wege-Auslassventils 24 dieses von der ersten in Fig. 1 gezeigten Schaltstellung in die zweite in Fig. 1 nicht gezeigte Schaltstellung verbracht.

Schließlich weist das elektropneumatische Anhängerversorgungsmodul 1 gemäß dem ersten Ausführungsbeispiel (Fig. 1) einen Drucksensor 42 auf, der über eine Messleitung 37 mit der Rückführleitung 12 verbunden ist und so den zweiten Steuerdruck p2 und hierdurch mittelbar den Versorgungsdruck pA erfasst. Der Drucksensor 42 stellt ein entsprechendes Drucksignal SD an der elektronischen Steuereinheit ECU bereit. In anderen Ausführungsformen stellt der Drucksensor 42 das Drucksignal SD direkt an einer übergeordneten Steuereinheit wie ein Zentralmodul oder dergleichen bereit. Mittels des Drucksensors 42 kann erfasst werden, ob ein Versorgungsdruck pA ausgesteuert ist oder nicht.

Die Funktionsweise des elektropneumatischen Anhängerversorgungsmoduls 1 gemäß dem ersten Ausführungsbeispiel (Fig. 1) ist wie folgt: Wird ein Anhängerkopplungssignal SA empfangen oder soll in sonstiger Weise der Versorgungsdruck pA bereitgestellt werden, wird von der elektronischen Steuereinheit ECU das erste Schaltsignal S1 bereitgestellt und das 2/2-Wege-Einlassventil 20 von der ersten in Fig. 1 gezeigten Schaltstellung in die zweite in Fig. 1 nicht gezeigte Schaltstellung verbracht. In der Folge wird der erste Steuerdruck p1 an dem ersten Steueranschluss 14.4 ausgesteuert. Sobald der erste Steuerdruck p1 den ersten vorgegebenen Schwellwert des Hauptventils 14 überschreitet, schaltet das Hauptventil 14 von der ersten in Fig. 1 gezeigten Schaltstellung in die zweite in Fig. 1 nicht gezeigte Schaltstellung. Der erste Steuerdruck p1 wird volumenverstärkt, und der Anhängerversorgungsanschluss 6 wird über das Hauptventil 14 mit dem Vorratsanschluss 2 verbunden. Der Versorgungsdruck pA ist bereitgestellt. Das Auslassventil 18 ist in der ersten Schaltstellung, genauer gesagt ist das 3/2-Wege-Auslassventil 24 in der ersten in Fig. 1 gezeigten Schaltstellung. In dieser ist die Rückführleitung 12 mit der zweiten Steuerleitung 27 verbunden, sodass über das 3/2-Wege-Auslassventil 24 der zweite Steuerdruck p2 ebenfalls an dem ersten Steueranschluss 14.4 bereitgestellt ist. Üblicherweise ist der zweite Steuerdruck p2 in etwa gleich hoch wie der erste Steuerdruck p1, sodass es nicht zu einer Übersteuerung kommt. Bedarfsweise kann auch vorgesehen sein, dass an der Verbindungsstelle 36 ein Select-High-Ventil eingesetzt ist, um eine Übersteuerung zu vermeiden. Der zweite Steuerdruck p2 hält also den geschalteten Zustand des Hauptventils 14 aufrecht. Das 2/2-Wege-Einlassventil 20 kann nun wieder stromlos geschaltet werden und in den ersten, stromlosen Schaltzustand (in Fig. 1 gezeigt) zurückfallen. Über das ebenfalls stromlos geschaltete 3/2-Wege-Auslassventil 24 bleibt der zweite Steuerdruck p2 an dem ersten Steueranschluss 14.4 ausgesteuert, und das Hauptventil 14 bleibt in der in Fig. 1 nicht gezeigten zweiten Schaltstellung. In dieser bleibt der Versorgungsdruck pA permanent ausgesteuert.

Kommt es nun zu einem Fall, in dem eine Leitung vom roten Kupplungskopf entfernt wird, wird der Anhängerversorgungsanschluss 6 direkt mit der Umgebung verbunden. Der Druck in der Versorgungsdruckleitung 32 fällt ab, und in der Folge fällt auch der zweite Steuerdruck p2 ab. Dieser fallende zweite Steuerdruck p2 wird über das stromlos geschaltete 3/2-Wege-Auslassventil 24 an dem ersten Steueranschluss 14.4 bereitgestellt. Sobald der zweite Steuerdruck p2 dann den ersten bzw. zweiten vorgegebenen Schwellwert des Hauptventils 14 unterschreitet, schaltet das Hauptventil 14 in die erste in Fig. 1 gezeigte Schaltstellung und verbindet den Anhängerversorgungsanschluss 6 mit der Entlüftung 5. Gleichzeitig sperrt das Hauptventil 14 den ersten Hauptventilanschluss 14.1, sodass der Vorratsanschluss 2 abgesperrt ist und nicht mehr mit der Umgebung verbunden ist. Hierdurch wird ein Entweichen von Versorgungsdruck pV aus den ersten und zweiten Druckluftvorräten 3, 4 in einem Abrissfall an dem roten Kupplungskopf vermieden.

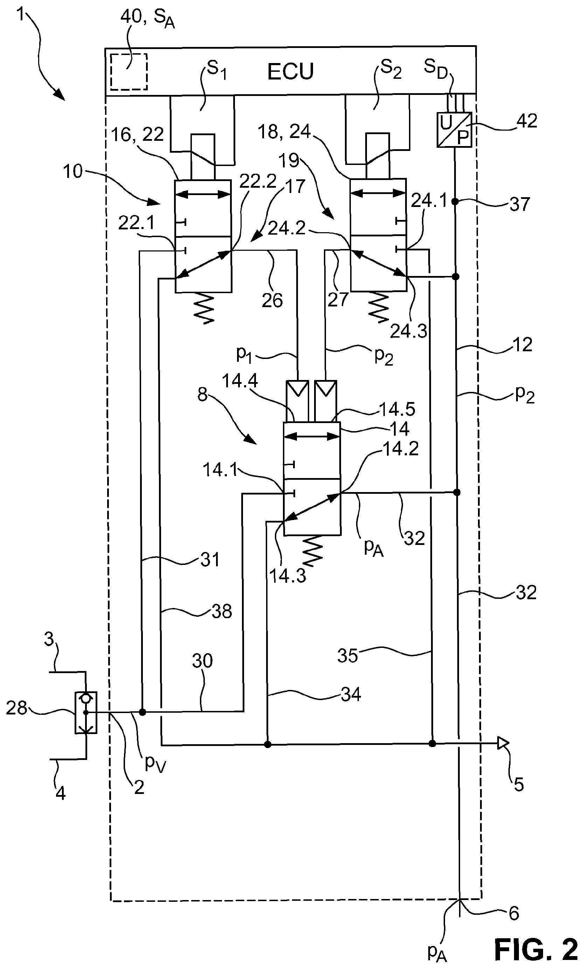

Fig. 2 zeigt nun ein zweites Ausführungsbeispiel des elektropneumatischen Anhängerversorgungsmoduls 1. Gleiche und ähnliche Elemente sind mit gleichen Bezugszeichen versehen, und insofern wird vollumfänglich auf die obige Beschreibung zum ersten Ausführungsbeispiel (Fig. 1) verwiesen. Im Folgenden werden insbesondere die Unterschiede zum ersten Ausführungsbeispiel (Fig. 1) hervorgehoben.

Ein wesentlicher Unterschied im zweiten Ausführungsbeispiel (Fig. 2) liegt darin, dass der Einlasskreis 17 und der Auslasskreis 19 pneumatisch getrennt sind bzw. pneumatisch getrennt sein können.

Um dies zu realisieren, ist das Einlassventil 16 als 3/2-Wege-Einlassventil 22 ausgebildet und weist einen ersten 3/2-Wege-Einlassventilanschluss 22.1, einen zweiten 3/2-Wege-Einlassventilanschluss 22.2 und einen dritten 3/2-Wege-Einlassventilanschluss 22.3 auf. Der erste 3/2-Wege-Einlassventilanschluss 22.1 ist in bekannter Weise mit der zweiten Vorratsdruckleitung 31 verbunden. Der zweite 3/2-Wege-Einlassventilanschluss ist in ebenfalls bekannter Weise mit der ersten Steuerleitung 26 verbunden. Der dritte 3/2-Wege-Einlassventilanschluss 22.3 wird zur Entlüftung des Einlasskreises 17 verwendet und ist daher mit einer dritten Entlüftungsleitung 38 verbunden, die zur Entlüftung 5 führt. In der stromlosen ersten Schaltstellung (in Fig. 2 gezeigt) ist daher der zweite 3/2-Wege-Einlassventilanschluss 22.2 mit dem dritten 3/2-Wege-Einlassventilanschluss 22.3 verbunden und verbindet somit die erste Steuerleitung 26 mit der Entlüftung 5, um den Einlasskreis 17 zu entlüften.

Als weiterer Unterschied, um die Trennung des Einlasskreises 17 von dem Auslasskreis 19 zu realisieren, weist die Hauptventileinheit 8 einen zweiten Steueranschluss 14.5 auf. Genauer gesagt weist das Hauptventil 14 den zweiten Steueranschluss 14.5 auf. Der zweite Steueranschluss 14.5 ist mit der zweiten Steuerleitung 27 verbunden, die in bekannter Weise zum zweiten 3/2-Wege-Auslassventilanschluss 24.2 des 3/2-Wege-Auslassventils 24 führt. Das Auslassventil 18 ist wie im ersten Ausführungsbeispiel (Fig. 1) auch im zweiten Ausführungsbeispiel (Fig. 2) als 3/2-Wege-Auslassventil 24 ausgebildet.

Schließlich ist für eine vollständige Trennung des Einlasskreises 17 von dem Auslasskreis 19 erforderlich, dass der erste Steueranschluss 14.4 und der zweite Steueranschluss 14.5 in zwei getrennte Steuerkammern münden und insbesondere auf zwei getrennte Steuerflächen einwirken. Hierdurch wird auch ermöglicht, dass ein zweiter Schwellwert für den zweiten Steuerdruck p2 vorgesehen sein kann. Auf diese Weise lässt sich eine verbesserte Schaltung realisieren, da die beiden Steuerdrücke p1 und p2 unabhängig voneinander sind. Sobald entweder der erste Steuerdruck p1 den ersten Schwellwert überschreitet oder der zweite Steuerdruck p2 den zweiten Schwellwert überschreitet, schaltet das Hauptventil 14 in die zweite in Fig. 2 nicht gezeigte Schaltstellung und verbindet den Vorratsanschluss 2 mit dem Anhängerversorgungsanschluss 6, um den Versorgungsdruck pA auszusteuern.

Die übrigen Elemente im zweiten Ausführungsbeispiel (Fig. 2) sind identisch zum ersten Ausführungsbeispiel (Fig. 1).

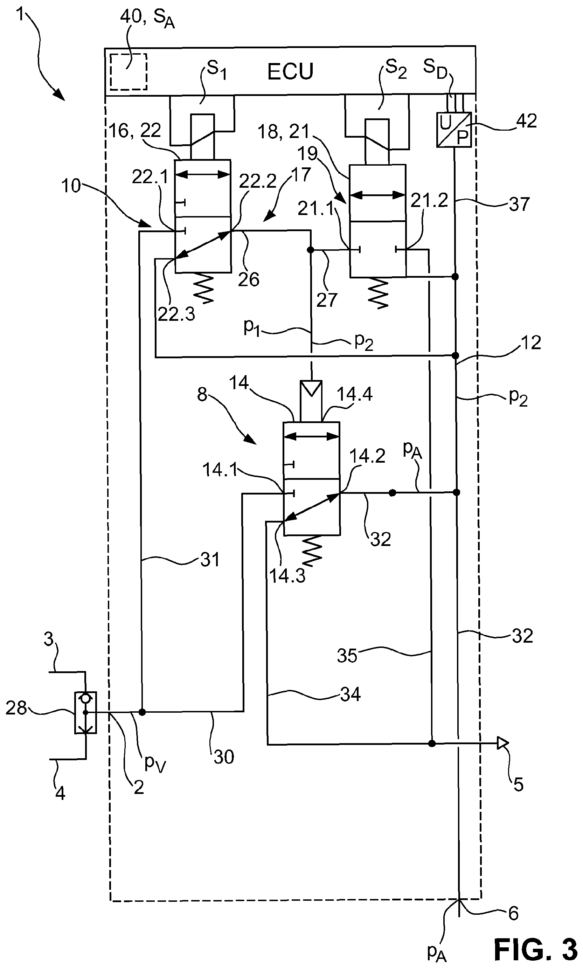

Ein drittes Ausführungsbeispiel des elektropneumatischen Anhängerversorgungsmoduls 1 ist in Fig. 3 gezeigt. Gleiche und ähnliche Elemente sind mit gleichen Bezugszeichen versehen, und sofern wird auf die obige Beschreibung zum ersten Ausführungsbeispiel (Fig. 1) und zum zweiten Ausführungsbeispiel (Fig. 2) verwiesen. Im Folgenden werden insbesondere die Unterschiede zum ersten und zweiten Ausführungsbeispiel (Fig. 1 und 2) hervorgehoben.

Grundsätzlich ist das Schaltungslayout in dem dritten Ausführungsbeispiel (Fig. 3) vergleichbar mit dem ersten Ausführungsbeispiel (Fig. 1), da das Hauptventil 14 nur mit einem ersten Steueranschluss 14.4 ausgestattet ist und insofern sowohl der erste als auch der zweite Steuerdruck p1, p2 an diesem ersten Steueranschluss 14.4 ausgesteuert werden.

Im Unterschied zum ersten Ausführungsbeispiel ist allerdings das Einlassventil 16 als 3/2-Wege-Einlassventil 22 ausgebildet, wie dies bereits aus dem zweiten Ausführungsbeispiel (Fig. 2) bekannt ist und das Auslassventil 18 ist als 2/2-Wege-Auslassventil 21 ausgebildet. Insofern ist die Schaltung in der elektropneumatischen Vorsteuereinheit 10 umgekehrt ausgebildet. Die Rückführleitung 12 verläuft nicht, wie im ersten Ausführungsbeispiel, zum Auslassventil 18, sondern zum Einlassventil 16. Genauer gesagt, ist die Rückführleitung 12 mit dem dritten 3/2-Wege-Einlassventilanschluss 22.3 verbunden, sodass in der stromlosen ersten Schaltstellung des 3/2-Wege-Einlassventils 22 die Rückführleitung 12 mit der ersten Steuerleitung 26 verbunden ist und der zweite Steuerdruck p2 an dem ersten Steueranschluss 14.4 aussteuerbar ist. Die Endlüftung des ersten Steueranschlusses 14.4 wird dann über das Auslassventil 18 ermöglicht, welches als 2/2-Wege-Auslassventil 21 ausgebildet ist. Das 2/2-Wege-Auslassventil 21 weist einen ersten 2/2-Wege-Auslassventilanschluss 21.1 und einen zweiten 2/2-Wege-Auslassventilanschluss 21.2 auf. Der erste 2/2-Wege-Auslassventilanschluss 21.1 ist mit der zweiten Steuerleitung 27 und somit mit dem ersten Steueranschluss 14.4 verbunden. Der zweite 2/2-Wege-Auslassventilanschluss 21.2 ist mit der zweiten Entlüftungsleitung 35 verbunden, die ihrerseits mit der Entlüftung 5 verbunden ist. Das 2/2-Wege-Auslassventil 21 weist eine erste stromlose Schaltstellung auf, in der es geschlossen ist (vgl. Fig. 3) und eine zweite in Fig. 3 nicht gezeigte Schaltstellung, in die es durch das zweite Signal S2 versetzbar ist und in der der erste 2/2-Wege-Auslassventilanschluss 21.1 mit dem zweiten 2/2-Wege-Auslassventilanschluss 21.2 verbunden ist.

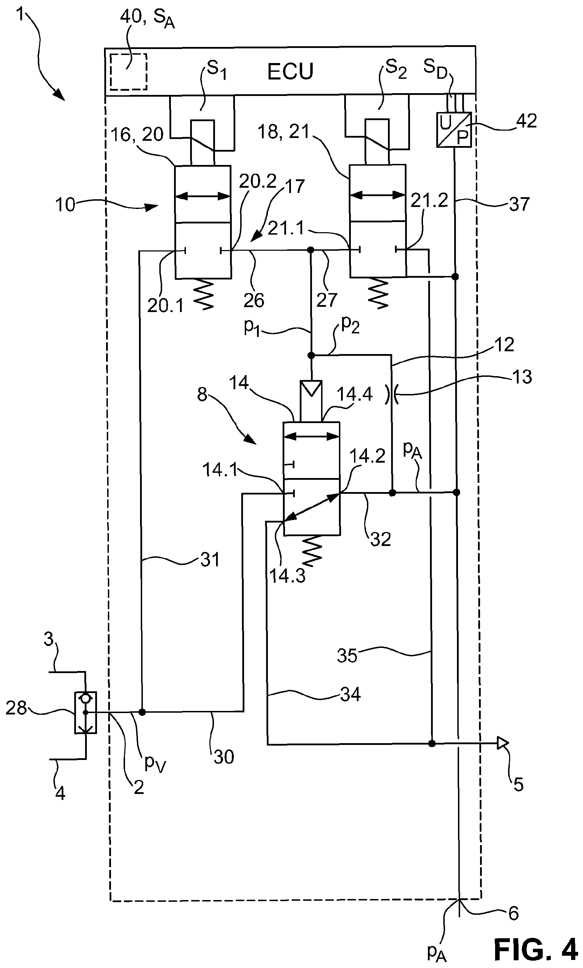

Figur 4 zeigt eine nicht erfindungsgemäße Variante des elektropneumatischen Anhängerversorgungsmoduls 1. Diese nicht erfindungsgemäße Variante basiert auf dem ersten und dritten Ausführungsbeispiel (Fig. 1 und 3), da wiederum ein Hauptventil 14 mit nur einem ersten Steueranschluss 14.4 vorgesehen ist.

Gleiche und ähnliche Elemente sind wiederum mit gleichen Bezugszeichen versehen, und insofern wird auf die obige Beschreibung zu den ersten drei Ausführungsbeispielen (Fig. 1, 2 und 3) verwiesen. Im Folgenden werden insbesondere die Unterschiede zu dem ersten und dritten Ausführungsbeispiel (Fig. 1 und 3) hervorgehoben.

Der wichtigste Unterschied in diesem nicht erfindungsgemäßen Ausführungsbeispiel (Fig. 4) liegt darin, dass die Rückführleitung 12 direkt zum ersten Steueranschluss 14.4 geführt ist, ohne vorher zur elektropneumatischen Vorsteuereinheit 10 zu verlaufen. Während in den ersten drei Ausführungsbeispielen (Fig. 1 bis 3) jeweils das Schalten wenigstens eines Ventils erforderlich war, um den zweiten Steuerdruck p2 an dem ersten Steueranschluss 14.4 auszusteuern, geschieht dies in dem nicht erfindungsgemäßen Ausführungsbeispiel (Fig. 4) selbsttätig, sobald der Versorgungsdruck pA ausgesteuert ist. Dazu zweigt die Rückführleitung 12 in bekannter Weise von der Versorgungsdruckleitung 32 ab und verläuft direkt ohne Zwischenschaltung eines Ventils zum ersten Steueranschluss 14.4.

Als weitere Besonderheit ist in der Rückführleitung 12 eine Drossel 13 angeordnet, die dazu dient, den rückgeführten Druck zu drosseln, sodass die leichte Druckschwankung nicht zu einem direkten Umschalten der Hauptventileinheit 12 führen und ein Wechsel der Schaltstellung ermöglicht wird. Es soll verstanden werden, dass die Drossel 13 auch in den Rückführleitungen 12 der ersten drei Ausführungsbeispielen (Figuren 1, 2 und 3) vorgesehen sein kann.

Als ein Resultat der direkten Rückführung der Ruckführleitung 12 kann die Vorsteuereinheit 10 einfacher ausgestaltet sein. In diesem Ausführungsbeispiel (Figur 4) weist die Vorsteuereinheit 10 daher als Einlassventil 16 das 2/2-Wege-Einlassventil 20 auf und als Auslassventil 18 das 2/2-Wege-Auslassventil 21, wie bereits in dem dritten Ausführungsbeispiel (Figur 3). Bezüglich der Schaltung der Einlass- und Auslassventile 16, 18 wird daher für das Einlassventil 16 auf das erste Ausführungsbeispiel (Fig. 1) und für das Auslassventil 18 auf das dritte Ausführungsbeispiel (Fig. 3) verwiesen.

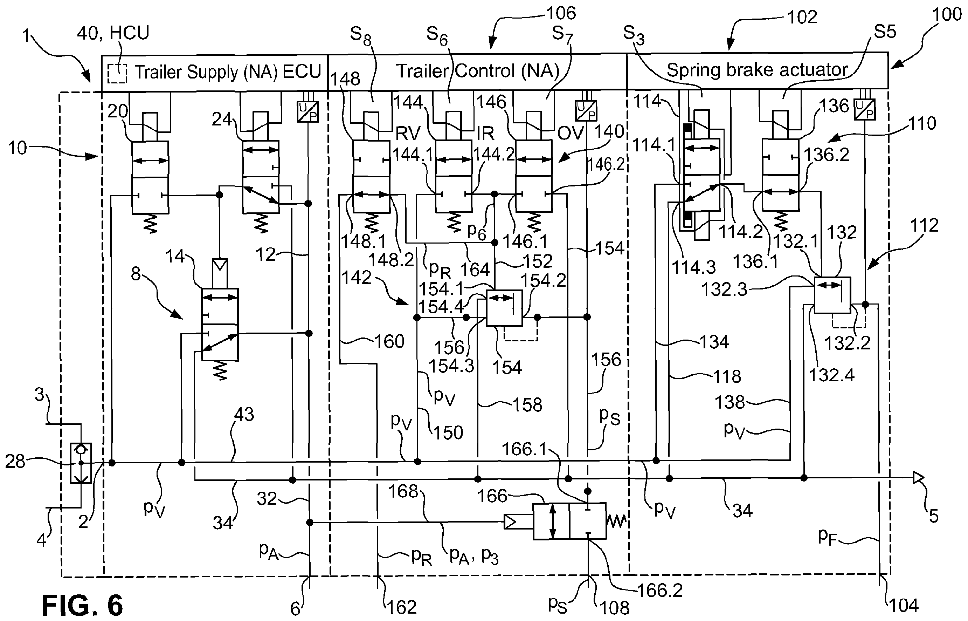

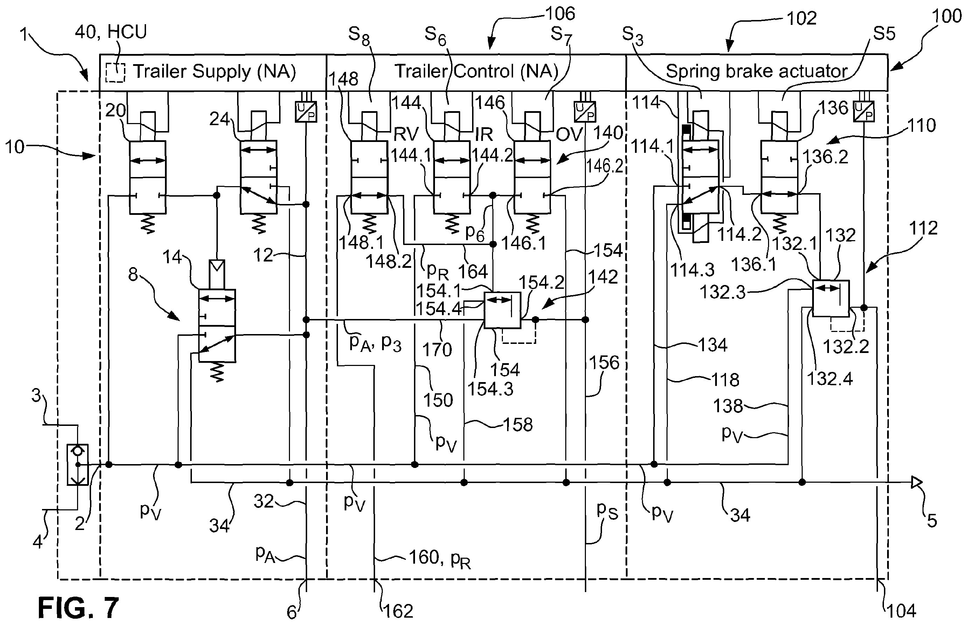

Die Fig. 5 bis 7 zeigen nun drei verschiedene Ausführungsbeispiele von elektropneumatischen Feststellbremsmodulen 100, in denen das elektropneumatische Anhängerversorgungsmodul 1 gemäß der vorliegenden Erfindung angewendet werden kann. Während Fig. 5 ein Beispiel eines elektropneumatischen Feststellbremsmoduls 100 in einer Basisausführung zeigt, zeigen die Fig. 6 und 7 jeweils elektropneumatische Feststellbremsmodule 100, die zusätzlich eine Anhängersteuereinheit 106 aufweisen, um einen Steuerdruck an einen Anhängerwagen zu übergeben, insbesondere an dem sogenannten "gelben Kupplungskopf" bzw. je nach Land auch "blauen Kupplungskopf" auszusteuern.

Mit Bezug auf Fig. 5 wird nun zunächst das erste Ausführungsbeispiel des elektropneumatischen Feststellbremsmoduls 100 beschrieben.

Das elektropneumatische Feststellbremsmodul 100 gemäß dem ersten Ausführungsbeispiel (Fig. 5) weist eine Feststellbremseinheit 102 und ein elektropneumatisches Anhängerversorgungsmodul 1 gemäß dem vorstehend beschriebenen ersten Ausführungsbeispiel (Fig. 1) auf. Es soll verstanden werden, dass ebenso ein elektropneumatisches Anhängerversorgungsmodul 1 gemäß dem zweiten Ausführungsbeispiel (Fig. 2), dem dritten Ausführungsbeispiel (Fig. 3), oder dem vierten Ausführungsbeispiel (Fig. 4) vorgesehen sein kann; hierdurch ergeben sich keine weiteren Änderungen. Beispielhaft wird das elektropneumatische Feststellbremsmodul 100 gemäß dem ersten Ausführungsbeispiel (Fig. 5) aus diesem Grund nur mit dem elektropneumatischen Anhängerversorgungsmodul 1 gemäß dem ersten Ausführungsbeispiel (Fig. 1) beschrieben.

Neben diesen beiden Einheiten weist das elektropneumatische Feststellbremsmodul 100 einen Federspeicheranschluss 104 auf, an den ein Federspeicherbremszylinder 105 anschließbar ist. Federspeicherbremszylinder 105 sind üblicherweise in dem Motorwagen vorgesehen, insbesondere an der Hinterachse des Motorwagens, um in einem geparkten Zustand des Motorwagens oder auch der Motorwagen-Anhängerkombination den Motorwagen zu bremsen. Federspeicherbremszylinder 105 sind bekannt und wirken invers, das heißt im belüfteten Zustand sind sie offen und im entlüfteten Zustand zugespannt. Hierzu ist im Inneren eine Feder vorgesehen, die den Federspeicherbremszylinder 105 im entlüfteten Zustand zuspannt. Federspeicherbremszylinder 105 werden also als Feststellbremsen oder als Parkbremsen eingesetzt, sogenannte elektropneumatische Handbremsen, und auch zum Zusatz- oder Hilfsbremsen in besonderen Fahrsituationen.

Insgesamt weist das elektropneumatische Feststellbremsmodul 100 einen einzigen Vorratsanschluss 2 auf, der an dem elektropneumatischen Anhängerversorgungsmodul 1 vorgesehen ist. Von der ersten Vorratsdruckleitung 30 zweigt eine dritte Vorratsdruckleitung 43 ab, die zur Feststellbremseinheit 102 verläuft, um die Feststellbremseinheit 102 mit Vorratsdruck pV zu versorgen. Die Feststellbremseinheit 102 empfängt also Vorratsdruck pV von dem Vorratsanschluss 2.

Die Feststellbremseinheit 102 gemäß diesem ersten Ausführungsbeispiel (Fig. 5) weist eine Besonderheit auf, da sie kein Relaisventil aufweist, das üblicherweise in sogenannten Feststellbremseinheiten oder anderen Feststellbremsmodulen vorgesehen ist (vgl. auch Figuren 6 und 7).

Die Feststellbremseinheit 102 weist gemäß diesem Ausführungsbeispiel (Fig. 5) eine Feststellbremsvorsteuereinheit 110 und eine Feststellbrems-Einlass-Auslass-Einheit 112 auf. Die Feststellbrems-Einlass-Auslass-Einheit 112 ist pneumatisch gesteuert, basierend auf einem vierten und fünften Steuerdruck p4, p5, die von der Feststellbremsvorsteuereinheit 110 bereitgestellt werden. Hierdurch lässt sich der Vorratsdruck pV direkt durchsteuern und direkt als Federspeicherbremsdruck pF an dem Federspeicheranschluss 104 aussteuern.

Die Feststellbremsvorsteuereinheit 110 weist ein bistabiles Steuerventil 114 mit einem ersten Bistabilventilanschluss 114.1, einem zweiten Bistabilventilanschluss 114.2 und einem dritten Bistabilventilanschluss 114.3 auf. Der erste Bistabilventilanschluss 114.1 ist mit der dritten Versorgungsdruckleitung 43 verbunden. Der zweite Bistabilventilanschluss 114.2 ist mit einer dritten Steuerleitung 116 verbunden, und der dritte Bistabilventilanschluss 114.3 ist mit einer vierten Entlüftungsleitung 118 verbunden. Die vierte Entlüftungsleitung 118 mündet in die erste Entlüftungsleitung 34 und schließlich zur Entlüftung 5. Durch entsprechendes Schalten des bistabilen Steuerventils 114 lässt sich also ein vierter Steuerdruck p4 an dem zweiten Bistabilventilanschluss 114.2 aussteuern, der über die dritte Steuerleitung 116 an der Feststellbremseinlassauslasseinheit 112 bereitgestellt wird. Genauer gesagt wird der vierte Steuerdruck p4 an einem Feststellbremseinlassventil 120 ausgesteuert. Das Feststellbremseinlassventil 120 ist als pneumatisch gesteuertes 3/2-Wege-Ventil ausgebildet und weist einen ersten Feststellbremseinlassventilanschluss 120.1, einen zweiten Feststellbremseinlassventilanschluss 120.2 und einen dritten Feststellbremseinlassventilanschluss 120.3 auf. Darüber hinaus weist es einen dritten Steueranschluss 120.4 auf, an dem der vierte Steuerdruck p4 über die dritte Steuerleitung 116 aussteuerbar ist. Wenn der vierte Steuerdruck p4 einen vierten Schwellwert unterschreitet, ist das Feststellbremseinlassventil 120 in der in Fig. 5 gezeigten ersten Schaltstellung, in der der zweite Feststellbremseinlassventilanschluss 120.2 mit dem dritten Feststellbremseinlassventilanschluss 120.3 verbunden ist, der seinerseits mit einer Entlüftung 5 verbunden ist. Überschreitet der vierte Steuerdruck p4 den vierten Schwellwert, schaltet das Feststellbrems-Einlassventil 120 in die zweite, in Fig. 5 nicht gezeigte Schaltstellung und verbindet den ersten Feststellbremseinlassventilanschluss 120.1 mit dem zweiten Feststellbremseinlassventilanschluss 120.2, sodass an diesem der Vorratsdruck pV ausgesteuert wird.

Der zweite Feststellbremseinlassventilanschluss 120.2 ist mit einem Feststellbremssperrventil 122 verbunden. Das Feststellbremssperrventil 122 ist als pneumatisch geschaltetes 2/2-Wege-Ventil ausgebildet und weist einen ersten Feststellbrems-Sperrventilanschluss 122.1 und einen zweiten Feststellbrems-Sperrventilanschluss 122.2 auf. Schließlich weist das Feststellbremssperrventil 122 einen vierten Steueranschluss 122.3 auf, an dem der fünfte Steuerdruck p5 aussteuerbar ist. Wenn der fünfte Steuerdruck p5 einen fünften Schwellwert unterschreitet, ist das Feststellbrems-Sperrventil 122 in der in Fig. 5 gezeigten ersten Schaltstellung und verbindet den ersten Feststellbrems-Sperrventilanschluss 122.1 mit dem zweiten Feststellbrems-Sperrventilanschluss 122.2. Wenn der fünfte Steuerdruck p5 allerdings den fünften Schwellwert des Feststellbrems-Sperrventils 122 überschreitet, schaltet das Feststellbrems-Sperrventil 122 in die zweite, in Fig. 5 nicht gezeigte Schaltstellung, wobei der erste und zweite Feststellbrems-Sperrventilanschluss 122.1, 122.2 getrennt sind. Im offenen Zustand lässt das Feststellbrems-Sperrventil 122 zu, dass der von dem Feststellbrems-Einlassventil ausgesteuerte Druck durchgesteuert wird und an dem zweiten Feststellbrems-Sperrventilanschluss 122.2 anliegt, welcher seinerseits mit einer Feststellbremsdruckleitung 48 verbunden ist. In die Feststellbremsdruckleitung 48 wird der Federspeicherbremsdruck pF ausgesteuert.

Der fünfte Steuerdruck p5 wird von einem 3/2-Wege-Steuerventil 124 ausgesteuert. Das 3/2-Wege-Steuerventil 124 weist einen ersten Steuerventilanschluss 124.1, einen zweiten Steuerventilanschluss 124.2 und einen dritten Steuerventilanschluss 124.3 auf. Der zweite Steuerventilanschluss 124.2 ist mit einer vierten Steuerleitung 126 verbunden, in die der fünfte Steuerdruck p5 ausgesteuert wird. Zum Aussteuern des fünften Steuerdrucks p5 ist ferner der erste Steuerventilanschluss 124.1 über eine fünfte Vorratsdruckleitung 128 mit der vierten Vorratsdruckleitung 43 verbunden. Der dritte Steuerventilanschluss 124.3 ist seinerseits mit einer fünften Entlüftungsleitung 130 verbunden, die ihrerseits in die erste Entlüftungsleitung 34 mündet.

Die Funktionsweise der Feststellbremseinheit 102 gemäß diesem Ausführungsbeispiel (Fig. 5) ist nun wie folgt: Von der elektronischen Steuereinheit 40 wird ein drittes Schaltsignal S3 für das bistabile Steuerventil 114 bereitgestellt. Das bistabile Steuerventil 114 wird hieraufhin in den zweiten stabilen Schaltzustand (in Fig. 5 nicht gezeigt) versetzt, wodurch der vierte Steuerdruck p4 ausgesteuert wird. Sobald der vierte Steuerdruck p4 den vierten Schwellwert überschreitet, schaltet das Feststellbremseinlassventil 120, und der Vorratsdruck pV wird durchgesteuert und als Federspeicherbremsdruck pF an dem Federspeicheranschluss 104 bereitgestellt. In diesem Zustand ist das Feststellbrems-Sperrventil 122 geöffnet und das 3/2-Wege-Steuerventil 124 stromlos. Auch das bistabile Steuerventil 114 ist stromlos, aber stabil in seiner zweiten Schaltstellung, insbesondere aufgrund eines Magneten, der den Ventilanker hält. Der Federspeicherbremsdruck pF bleibt ausgesteuert und die Federspeicherbremszylinder 105 belüftet und somit geöffnet. Zum Entlüften der Federspeicherbremszylinder 105 ist das bistabile Steuerventil 114 erneut zu schalten, sodass der vierte Steuerdruck p4 entlüftet wird und das Feststellbrems-Einlassventil 120 in die erste in Fig. 5 gezeigte Schaltstellung schaltet. Der Federspeicheranschluss 104 wird entlüftet, und die Federspeicherbremszylinder 105 spannen zu.

Das 3/2-Wege-Steuerventil 124 und das Feststellbrems-Sperrventil 122 dienen insbesondere zum gepulsten Be- und Entlüften des Federspeicheranschlusses 104, wenn die Feststellbremszylinder 105 zum Hilfsbremsen oder Zusatzbremsen verwendet werden sollen. Hierzu ist es dann nicht erforderlich, das bistabile Steuerventil 114 hin- und herzuschalten, vielmehr reicht es, entsprechende vierte Schaltsignale S4 an dem 3/2-Wege-Steuerventil 124 auszusteuern, sodass das Feststellbrems-Sperrventil 122 gepulst wird.

Das zweite Ausführungsbeispiel des elektropneumatischen Feststellbremsmoduls 100 (Fig. 6) unterscheidet sich von dem ersten Ausführungsbeispiel des elektropneumatischen Feststellbremsmoduls (Fig. 5) insbesondere dadurch, dass die Feststellbremseinheit 102 in der Feststellbrems-Einlass-Auslass-Einheit 112 anstelle des Feststellbremseinlassventils 120 und des Feststellbremssperrventils 122 nur ein einziges Feststellbrems-Relaisventil 132 aufweist. Ein weiterer Unterschied liegt darin, dass eine Anhängersteuereinheit 106 vorgesehen ist, die einen Anhängersteueranschluss 108 aufweist, zum Aussteuern eines Anhängersteuerdrucks pS, der dazu vorgesehen ist, ein Betätigen von Betriebsbremsen des Anhängerwagens zu bewirken. Der Anhängersteuerdruck pS wird vorzugsweise an dem sogenannten gelben Kupplungskopf bereitgestellt.

Zunächst wird nun die Feststellbremseinheit 102 gemäß diesem zweiten Ausführungsbeispiel (Fig. 6) des elektropneumatischen Feststellbremsmoduls 100 beschrieben. Die Feststellbrems-Vorsteuereinheit 110 weist wiederum ein bistabiles Steuerventil 114 auf, das mit seinem ersten Bistabilventilanschluss 114.1 mit einer sechsten Vorratsdruckleitung 134 verbunden ist, die von der dritten Vorratsdruckleitung 43 abzweigt. Auf diese Weise wird wiederum der Feststellbremseinheit 102 der Vorratsdruck pV von dem Vorratsanschluss 2 des elektropneumatischen Anhängerversorgungsmoduls 1 bereitgestellt. Der dritte Bistabilventilanschluss 114.3 ist wiederum über die vierte Entlüftungsleitung mit der ersten Entlüftungsleitung 34 und somit mit der Entlüftung 5 verbunden. An dem zweiten Bistabilventilanschluss 114.2 wird ein sechster Steuerdruck p6 ausgesteuert, der zunächst an einem 2/2-Wege-Steuerventil 136 bereitgestellt wird, welches diesen stromlos durchsteuert. Das 2/2-Wege-Steuerventil 136 weist einen ersten 2/2-Wege-Steuerventilanschluss und einen zweiten 2/2-Wege-Steuerventilanschluss auf. Durch ein fünftes Schaltsignal S5, welches von der elektronischen Steuereinheit ECU bereitgestellt wird, lässt sich das 2/2-Wege-Steuerventil 136 von der in Fig. 6 gezeigten ersten offenen Schaltstellung in eine zweite, in Fig. 6 nicht gezeigte geschlossene Schaltstellung verbringen. Das 2/2-Wege-Steuerventil 136 dient ebenso wie das 3/2-Wege-Steuerventil im Wesentlichen dem gepulsten Be- und Entlüften bzw. gestuften Be- und Entlüften des Federspeicheranschlusses 104.

Das 2/2-Wege-Steuerventil 136 steuert einen sechsten Steuerdruck p6 aus, der an einem Feststellbrems-Relaisventilsteueranschluss 132.1 des Relaisventils 132 bereitgestellt wird. Weiterhin weist das Feststellbrems-Relaisventil 132 einen Feststellbrems-Relaisventilarbeitsanschluss 132.2, einen Feststellbrems-Relaisventilvorratsanschluss 132.3 und einen Feststellbrems-Relaisventilentlüftungsanschluss 132.4 auf. An dem Feststellbrems-Relaisventilarbeitsanschluss 132.2 wird der Federspeicherdruck pF ausgesteuert, der einem volumenverstärkten sechsten Steuerdruck p6 entspricht. Über den Feststellbrems-Relaisventilvorratsanschluss 132.3 ist das Feststellbrems-Relaisventil 132 über eine siebte Vorratsdruckleitung 138 mit der dritten Vorratsdruckleitung 43 verbunden, sodass der Vorratsdruck pV an dem Feststellbrems-Relaisventilvorratsanschluss 132.3 ausgesteuert wird. Über den Feststellbrems-Relaisventilentlüftungsanschluss 132.4 ist das Feststellbrems-Relaisventil132 mit der ersten Entlüftungsleitung 34 verbunden und somit mit der Entlüftung 5. Dieser Aufbau einer Feststellbremseinheit 102 ist allgemein bekannt.

Zwischen dem elektropneumatischen Anhängerversorgungsmodul 1 und der Feststellbrems-Einheit 102 ist gemäß diesem Ausführungsbeispiel (Fig. 6) eine Anhängersteuereinheit 106 angeordnet. Die Anhängersteuereinheit 106 dient dazu, einen Anhängersteuerdruck pS auszusteuern, der im Allgemeinen den Betriebsbremsdruck für den Anhängerwagen darstellt. Dazu weist die Anhängersteuereinheit 106 eine Anhänger-Vorsteuereinheit 140 und eine Anhänger-Einlass-Auslass-Einheit 142 auf. Die Anhänger-Vorsteuereinheit 140 weist ein Anhänger-Einlassventil 144, ein Anhänger-Auslassventil 146 und ein Anhänger-Redundanzventil 148 auf. Alle drei Ventile 144, 146, 148 sind als elektropneumatisch geschaltete 2/2-Wege-Ventile ausgebildet. Das Anhänger-Einlassventil 144 weist einen ersten Anhänger-Einlassventilanschluss 144.1 und einen zweiten Anhänger-Einlassventilanschluss 144.2 auf, wobei der erste Anhänger-Einlassventilanschluss 144.1 über eine achte Vorratsdruckleitung 150 mit der dritten Vorratsdruckleitung 43 verbunden ist und somit Vorratsdruck pV empfängt, insbesondere von dem Vorratsanschluss 2 des elektropneumatischen Anhängerversorgungsmoduls 1. Durch Bereitstellen eines sechsten Schaltsignals S6 wird das Anhänger-Einlassventil 144 von der ersten in Figur 6 gezeigten geschlossenen Schaltstellung in die zweite in Figur 6 nicht gezeigte offene Schaltstellung versetzt und ein siebter Steuerdruck p7 wird ausgesteuert. Der siebte Steuerdruck p7 wird über eine Steuerleitung 152 an einem Anhänger-Relaisventil 154 bereitgestellt.

Das Anhänger-Auslassventil 146 weist einen ersten Anhänger-Auslassventilanschluss 146.1 und einen zweite Anhänger-Auslassventilanschluss 146.2 auf, wobei der erste Anhänger-Auslassventilanschluss 146.1 mit der sechsten Steuerleitung 152 verbunden ist, und der zweite Anhänger-Auslassventilanschluss 146.2 mit einer sechsten Entlüftungsleitung 153 verbunden ist. Die sechste Entlüftungsleitung 153 mündet in die erste Entlüftungsleitung 134 und führt somit zur Entlüftung 5. Über das Anhänger-Auslassventil 146 lässt sich die sechste Steuerleitung 152 entlüften, um den siebten Steuerdruck p7 zu reduzieren. Dazu stellt die elektronische Steuereinheit ECU ein siebtes Schaltsignal S7 bereit, um das Anhänger-Auslassventil 146 von der in Figur 6 gezeigten geschlossenen Schaltstellung in die in Figur 6 nicht gezeigte offene Schaltstellung zu verbringen.

Das Anhänger-Relaisventil 154 weist ebenso wie das Feststellbrems-Relaisventil 132, einen Anhänger-Relaisventilsteueranschluss 154.1 auf, an dem der siebte Steuerdruck p7 über die sechste Steuerleitung 152 ausgesteuert wird. Darüber hinaus weist das Anhänger-Relaisventil 154 einen Anhänger-Relaisventilarbeitsanschluss 154.2 einen Anhänger-Relaisventilvorratsanschluss 154.3 und einen Anhänger-Relaisventilentlüftungsanschluss 154.4 auf. Der Anhänger-Relaisventilarbeitsanschluss 154.2 ist mit einer Anhängerbremsdruckleitung 156 verbunden, in die der Anhängersteuerdruck pS ausgesteuert wird. Weiterhin ist das Anhänger-Relaisventil 154 in bekannter Weise über seinen Anhänger-Relaisventilvorratsanschluss 154.3 mit der achten Vorratsdruckleitung 150, bzw. einer Abzweigleitung 157 davon verbunden, um mit Vorratsdruck pV versorgt zu werden, insbesondere über den Vorratsanschluss 2. Weiterhin ist in bekannter Weise der Anhänger-Relaisventilentlüftungsanschluss 154.4 über eine siebte Entlüftungsleitung 158 mit der ersten Entlüftungsleitung 34 und somit mit der Entlüftung 5 verbunden.

Gemäß diesem Ausführungsbeispiel (Fig. 6) weist die Anhänger-Vorsteuereinheit 140 weiterhin das Anhänger-Redundanzventil 148 auf. Das Anhänger-Redundanzventil 148 weist einen ersten Anhänger-Redundanzventilanschluss 148.1 und einen zweiten Anhänger-Redundanzventilanschluss 148.2 auf. Der erste Anhänger-Redundanzventilanschluss 148.1 ist mit einer Redundanzdruckleitung 160 verbunden, der mit einem Redundanzanschluss 162 verbunden ist. An dem Redundanzanschluss 162 ist ein Redundanzdruck pR aussteuerbar, beispielsweise über ein pneumatisches Bremspedal. In anderen Ausführungsbeispielen kann als Redundanzdruck pR auch der Druck einer weiteren Fahrzeugachse, beispielsweise der Vorderachse redundant an dem Redundanzanschluss 162 ausgesteuert werden. Der Redundanzdruck pR dient insbesondere dazu, den siebten Steuerdruck p7 zu ersetzen, für den Fall, dass die elektronische Steuereinheit ECU nicht richtig oder nicht funktioniert. Zu diesem Zweck steuert das Anhänger-Redundanzventil 148 den Redundanzdruck pR in eine siebte Steuerleitung 164 aus, die in die sechste Steuerleitung 152 mündet und somit den Redundanzdruck pR an dem Anhänger-Relaisventilsteueranschluss 154.1 bereitstellen kann.

Im üblichen Fahrbetrieb wird das Anhänger-Redundanzventil 148 mittels eines achten Schaltsignals S8 bestromt, sodass es in der in Fig. 6 nicht gezeigten geschlossenen Schaltstellung ist. Der Redundanzdruck pR wird ausgesperrt. Für den Fall, dass die elektronische Steuereinheit 40 einen Fehler aufweist, wird das Anhänger-Redundanzventil 148 stromlos geschaltet sodass es in dem ersten in Figur 6 gezeigten offenen Schaltzustand fällt und der Redundanzdruck pR an dem Anhänger-Relaisventilsteueranschluss 154.1 ausgesteuert werden kann.

Als weitere Besonderheit ist in diesem Ausführungsbeispiel (Fig. 6) vorgesehen, dass in der Anhängerbremsdruckleitung 156 ein Schutzventil 166 angeordnet ist. Ein solches Schutzventil 166 wird auch als "tractor protection valve" (TPV) bezeichnet und dient dazu, dem Anhängersteuerdruck pS nur dann an dem Anhängersteueranschluss 108 bereitzustellen, wenn auch ein Versorgungsdruck pA bereitgestellt wird. Zu diesem Zweck ist das Schutzventil 166 pneumatisch gesteuert ausgebildet und mit einer Schutzventilsteuerleitung 168 mit der Versorgungsdruckleitung 32 verbunden, sodass als dritter Steuerdruck p3 der Anhänger-Versorgungsdruck pA an dem Schutzventil 166 bereitgesellt wird. sobald der dritte Steuerdruck p3 einen vorgegebenen Schutzventilschwellwert überschreitet, schaltet das Schutzventil in die in Figur 6 nicht gezeigte zweite Schaltstellung und verbindet einen ersten Schutzventilanschluss 166.1 mit einem zweiten Schutzventilanschluss 166.2, sodass der Anhängersteuerdruck pS an dem Anhängersteueranschluss 108 aussteuerbar ist. Für den Fall, dass der dritte Steuerdruck p3 den Schutzventilschwellwert unterschreitet, also insbesondere für den Fall, dass kein Anhänger-Versorgungsdruck pA ausgesteuert ist, schaltet das Schutzventil 166 in die in Figur 6 gezeigte erste Schaltstellung, sodass eine Aussteuerung des Anhängersteuerdrucks pS verhindert ist, unabhängig von der Schaltstellung der Anhänger-Vorsteuereinheit 140 oder der Anhänger-Einlass-Auslass-Einheit 142.

In dem dritten Ausführungsbeispiel des elektropneumatischen Feststellbremsmoduls 100 (Figur 7) liegt der Unterschied in der Anhängersteuereinheit 106. Gleiche und ähnliche Elemente sind wiederum mit gleichen Bezugszeichen versehen und insofern wird vollumfänglich auf die obige Beschreibung Bezug genommen. Im Nachfolgenden wird insbesondere auf die Unterschiede zwischen dem dritten Ausführungsbeispiel (Fig. 7) und dem zweiten Ausführungsbeispiel (Fig. 6) des elektropneumatischen Feststellbremsmoduls 100 eingegangen.

Der Unterschied zwischen dem dritten Ausführungsbeispiel (Fig. 7) und dem zweiten Ausführungsbeispiel (Fig. 6) liegt darin, dass kein separates Schutzventil 166 vorgesehen ist. Um dennoch ein Aussteuern des Anhängersteuerdrucks pS zu verhindern, für den Fall dass kein Anhänger-Versorgungsdruck pA ausgesteuert ist, nutzt die Schaltung gemäß dem dritten Ausführungsbeispiel eine Relaisventil-Versorgungsleitung 170, die von der Versorgungsdruckleitung 32 oder der Rückführleitung 12 abzweigt. Sowohl in der Versorgungsdruckleitung 32 als auch in der Rückführleitung 12 liegt der Versorgungdruck pA an, wenn dieser ausgesteuert ist. Das heißt, das Anhänger-Relaisventil 154 empfängt seinen Vorratsdruck am Anhänger-Relaisventilvorratsanschluss 154.3 von dem elektropneumatischen Anhängerversorgungsmodul 1 und zwar nur dann, wenn der Versorgungsdruck pA ausgesteuert ist. Auch hierdurch wird verhindert, dass ein Anhängersteuerdruck pS ausgesteuert wird, wenn kein Versorgungsdruck pA an dem Anhängerversorgungsanschluss 6 ausgesteuert werden kann. Der Vorteil dieser Schaltung liegt darin, dass das separate Schutzventil 166 entfallen kann.

### Bezugszeichenliste (Bestandteil der Beschreibung)

- 1: elektropneumatisches Anhängerversorgungsmodul
- 2: Vorratsanschluss
- 3: erster Druckluftvorrat
- 4: zweiter Druckluftvorrat
- 5: Entlüftung
- 6: Anhängerversorgungsanschluss
- 8: pneumatisch gesteuerte Hauptventileinheit
- 10: elektropneumatische Vorsteuereinheit
- 12: Rückführleitung
- 13: Drossel
- 14: Hauptventil
- 14.1: erster Hauptventilanschluss
- 14.2: zweiter Hauptventilanschluss
- 14.3: dritter Hauptventilanschluss
- 14.4: erster Steueranschluss
- 14.5: zweiter Steueranschluss
- 16: Einlassventil
- 17: Einlasskreis
- 18: Auslassventil
- 19: Auslasskreis
- 20: 2/2-Wege-Einlassventil
- 20.1: erster 2/2-Wege-Einlassventilanschluss
- 20.2: zweiter 2/2-Wege-Einlassventilanschluss
- 21: 2/2-Wege-Auslassventil
- 21.1: erster 2/2-Wege-Auslassventilanschluss
- 21.2: zweiter 2/2-Wege-Auslassventilanschluss
- 22: 3/2-Wege-Einlassventil
- 22.1: erster 3/2-Wege-Einlassventilanschluss
- 22.2: zweiter 3/2-Wege-Einlassventilanschluss
- 22.3: dritter 3/2-Wege-Einlassventilanschluss
- 24: 3/2-Wege-Auslassventil
- 24.1: erster 3/2-Wege-Auslassventilanschluss
- 24.2: zweiter 3/2-Wege-Auslassventilanschluss
- 24.3: dritter 3/2-Wege-Auslassventilanschluss
- 26: erste Steuerleitung
- 27: zweite Steuerleitung
- 28: Select-High-Ventil
- 30: erste Vorratsdruckleitung
- 31: zweite Vorratsdruckleitung
- 32: Versorgungsdruckleitung
- 34: erste Entlüftungsleitung
- 35: zweite Entlüftungsleitung
- 36: Verbindungsstelle
- 37: Messleitung
- 38: dritte Entlüftungsleitung
- 40: elektrischer Anschluss
- 42: Drucksensor
- 43: dritte Vorratsdruckleitung
- 48: Feststellbremsdruckleitung
- 100: Elektropneumatisches Feststellbremsmodul
- 102: Feststellbremseinheit
- 104: Federspeicheranschluss
- 105: Federspeicherbremszylinder
- 106: Anhängersteuereinheit
- 108: Anhängersteueranschluss
- 110: Feststellbrems-Vorsteuereinheit
- 112: Feststellbrems-Einlass-Auslass-Einheit
- 114: bistabiles Steuerventil
- 114.1: erster Bistabilventilanschluss
- 114.2: zweiter Bistabilventilanschluss
- 114.3: dritter Bistabilventilanschluss
- 116: dritte Steuerleitung
- 118: vierte Entlüftungsleitung
- 120: Feststellbrems-Einlassventil
- 120.1: erster Feststellbrems-Einlassventilanschluss
- 120.2: zweiter Feststellbrems-Einlassventilanschluss
- 120.3: dritter Feststellbrems-Einlassventilanschluss
- 120.4: dritter Steueranschluss
- 122: Feststellbrems-Sperrventil
- 122.1: erster Feststellbrems-Sperrventilanschluss
- 122.2: zweiter Feststellbrems-Sperrventilanschluss
- 122.3: vierter Steueranschluss
- 124: 3/2-Wege-Steuerventil
- 124.1: erster Steuerventilanschluss
- 124.2: zweiter Steuerventilanschluss
- 124.3: dritter Steuerventilanschluss
- 126: vierte Steuerleitung
- 128: fünfte Vorratsdruckleitung
- 130: fünfte Entlüftungsleitung
- 132: Feststellbrems-Relaisventil
- 132.1: Feststellbrems-Relaisventilsteueranschluss
- 132.2: Feststellbrems-Relaisventilarbeitsanschluss
- 132.3: Feststellbrems-Relaisventilvorratsanschluss
- 132.4: Feststellbrems-Relaisventilentlüftungsanschluss
- 134: sechste Vorratsdruckleitung
- 136: 2/2-Wege-Steuerventil
- 136.1: erster 2/2-Wege-Steuerventilanschluss
- 136.2: zweiter 2/2-Wege-Steuerventilanschluss
- 138: sechste Vorratsdruckleitung
- 140: Anhänger-Vorsteuereinheit
- 142: Anhänger-Einlass-Auslass-Einheit
- 144: Anhänger-Einlassventil
- 144.1: erster Anhänger-Einlassventilanschluss
- 144.2: zweiter Anhänger-Einlassventilanschluss
- 146: Anhänger-Auslassventil
- 146.1: erster Anhänger-Auslassventilanschluss
- 146.2: zweiter Anhänger-Auslassventilanschluss
- 148: Anhänger-Redundanzventil
- 148.1: erster Redundanzventilanschluss
- 148.2: zweiter Redundanzventilanschluss
- 150: achte Vorratsdruckleitung
- 152: sechste Steuerleitung
- 153: sechste Entlüftungsleitung
- 154: Anhänger-Relaisventil
- 154.1: Anhänger-Relaisventilsteueranschluss
- 154.2: Anhänger-Relaisventilarbeitsanschluss
- 154.3: Anhänger-Relaisventilvorratsanschluss
- 154.4: Anhänger-Relaisventilentlüftungsanschluss
- 156: Anhängerbremsdruckleitung
- 157: Abzweigleitung
- 158: siebte Entlüftungsleitung
- 160: Redundanzdruckleitung
- 162: Redundanzdruckanschluss
- 164: siebte Steuerleitung
- 166: Schutzventil
- 166.1: erster Schutzventilanschluss
- 166.2: zweiter Schutzventilanschluss
- 168: Schutzventilsteuerleitung
- 170: Relaisventil-Vorratsleitung
- ECU: elektronische Steuereinheit
- p1: erster Steuerdruck
- p2: zweiter Steuerdruck
- p3: dritter Steuerdruck
- p4: vierter Steuerdruck
- p5: fünfter Steuerdruck
- p6: sechster Steuerdruck
- p7: siebter Steuerdruck
- pA: Versorgungsdruck
- pF: Federspeicherbremsdruck
- pR: Redundanzdruck
- pS: Anhängersteuerdruck
- pV: Vorratsdruck
- S1: erstes Schaltsignal
- S2: zweites Schaltsignal
- S3: drittes Schaltsignal
- S4: viertes Schaltsignal
- S5: fünftes Schaltsignal
- S6: sechstes Schaltsignal
- S7: siebtes Schaltsignal
- SA: Anhängerkopplungssignal
- SD: Drucksignal

## Patentansprüche

1. Elektropneumatisches Anhängerversorgungsmodul (1) für ein elektropneumatisches Parkbremssystem für Nutzfahrzeuge, insbesondere Motorwagen-Anhängerkombinationen, mit
einem Vorratsanschluss (2) zum Anschließen eines Druckluftvorrats (3, 4),
einem Anhängerversorgungsanschluss (6) zum Übergeben eines Versorgungsdrucks (pA) für einen Anhängerwagen,
einer pneumatisch gesteuerten Hauptventileinheit (8) zum Bereitstellen des Versorgungsdrucks (pA) am Anhängerversorgungsanschluss (6), und
einer elektropneumatischen Vorsteuereinheit (10) zum Aussteuern wenigstens eines ersten Steuerdrucks (p1) an der pneumatisch gesteuerten Hauptventileinheit (8), wobei wenn der erste Steuerdruck (p1) einen vorgegebenen ersten Schwellwert der pneumatisch gesteuerten Hauptventileinheit (8) übersteigt der Versorgungsdruck (pA) am Anhängerversorgungsanschluss (6) aussteuerbar ist, und wenn der erste Steuerdruck (p1) den vorgegebenen ersten Schwellwert der pneumatisch gesteuerten Hauptventileinheit (8) unterschreitet der Anhängerversorgungsanschluss (6) entlüftbar ist und wobei der von der pneumatisch gesteuerten Hauptventileinheit (8) ausgesteuerte Versorgungsdruck (pA) als ein zweiter Steuerdruck (p2) an der pneumatisch gesteuerten Hauptventileinheit (8) aussteuerbar ist, zum pneumatischen Halten des ausgesteuerten Versorgungsdrucks (pA),
aufweisend eine Rückführleitung (12), die dazu vorgesehen ist, den von der pneumatisch gesteuerten Hauptventileinheit (8) ausgesteuerten Versorgungsdrucks (pA) als zweiten Steuerdruck (p2) an der pneumatisch gesteuerten Hauptventileinheit (8) auszusteuern,
**dadurch gekennzeichnet, dass** die Rückführleitung (12) mit der elektropneumatischen Vorsteuereinheit (10) verbunden ist, wobei die elektropneumatische Vorsteuereinheit (10) in einer stromlosen Schaltstellung das Aussteuern des zweiten Steuerdrucks (p2) an der pneumatisch gesteuerten Hauptventileinheit (8) erlaubt.

2. Elektropneumatisches Anhängerversorgungsmodul (1) nach Anspruch 1, wobei wenn der zweite Steuerdruck (p2) einen vorgegebenen zweiten Schwellwert der pneumatisch gesteuerten Hauptventileinheit (8) übersteigt die Schaltstellung aufrechterhalten bleibt, und wenn der zweite Steuerdruck (p2) den vorgegebenen zweiten Schwellwert der pneumatisch gesteuerten Hauptventileinheit (8) unterschreitet die Hauptventileinheit (8) schaltet und der Anhängerversorgungsanschluss (6) entlüftbar ist.

3. Elektropneumatisches Anhängerversorgungsmodul (1) nach Anspruch 1, wobei die Rückführleitung (12) eine Drossel (13) aufweist.

4. Elektropneumatisches Anhängerversorgungsmodul (1) nach Anspruch 1, wobei die ersten und zweiten Steuerdrücke (p1, p2) eine gemeinsame Steuerfläche der pneumatisch gesteuerten Hauptventileinheit (8) zugeordnet sind.

5. Elektropneumatisches Anhängerversorgungsmodul (1) nach einem der vorstehenden Ansprüche, wobei die pneumatisch gesteuerte Hauptventileinheit (8) ein als 3/2-Wegeventil ausgebildetes Hauptventil (14) aufweist, mit einem mit dem Vorratsanschluss (2) verbundenen ersten Hauptventilanschluss (14.1), einem mit dem Anhängerversorgungsanschluss (6) verbundenen zweiten Hauptventilanschluss (14.2), einem mit einer Entlüftung (5) verbundenen dritten Hauptventilanschluss (14.3) und einem mit der Vorsteuereinheit (10) verbundenen ersten Steueranschluss (14.4), an dem der erste Steuerdruck (p1) aussteuerbar ist.

6. Elektropneumatisches Anhängerversorgungsmodul (1) nach Anspruch 5, wobei auch der zweite Steuerdruck (p2) an dem ersten Steueranschluss (14.4) aussteuerbar ist, oder das Hauptventil (14) einen zweiten Steueranschluss (14.5) aufweist, an dem der zweite Steuerdruck (p2) aussteuerbar ist.

7. Elektropneumatisches Anhängerversorgungsmodul (1) nach einem der vorstehenden Ansprüche, wobei die elektropneumatische Vorsteuereinheit (10) ein Einlassventil (16) und ein Auslassventil (18) aufweist.

8. Elektropneumatisches Anhängerversorgungsmodul (1) nach Anspruch 7, wobei das Einlassventil (16) einem Einlasskreis (17) zugeordnet ist und das Auslassventil (18) einem Auslasskreis (19) zugeordnet ist, und wobei der Einlasskreis (17) und der Auslasskreis (19) pneumatisch verbunden sind.

9. Elektropneumatisches Anhängerversorgungsmodul (1) nach Anspruch 7, wobei das Einlassventil (16) einem Einlasskreis (17) zugeordnet ist und das Auslassventil (18) einem Auslasskreis (19) zugeordnet ist, und wobei der Einlasskreis (17) und der Auslasskreis (19) getrennt sind.

10. Elektropneumatisches Anhängerversorgungsmodul (1) nach Anspruch 7 oder 8, wobei das Einlassventil (16) als 2/2-Wege-Einlassventil (20) ausgebildet ist.

11. Elektropneumatisches Anhängerversorgungsmodul (1) nach Anspruch 10, wobei das 2/2-Wege-Einlassventil (20) einen mit dem Vorratsanschluss (2) verbundenen ersten 2/2-Wege-Einlassventilanschluss (20.1) und einen mit der pneumatisch gesteuerten Hauptventileinheit (8) verbundenen zweiten 2/2-Wege-Einlassventilanschluss (20.2) aufweist.

12. Elektropneumatisches Anhängerversorgungsmodul (1) nach Anspruch 7, wobei das Einlassventil (16) als 3/2-Wege-Einlassventil (22) ausgebildet ist.

13. Elektropneumatisches Anhängerversorgungsmodul (1) nach Anspruch 12, wobei das 3/2-Wege-Einlassventil (22) einen mit dem Vorratsanschluss (2) verbundenen ersten 3/2-Wege-Einlassventilanschluss (22.1), einen mit der Hauptventileinheit (8) verbundenen zweiten 3/2-Wege-Einlassventilanschluss (22.2) und einen mit einer Entlüftung (5) verbundenen dritten 3/2-Wege-Einlassventilanschluss (22.3) aufweist.

14. Elektropneumatisches Anhängerversorgungsmodul (1) nach Anspruch 7, wobei das Auslassventil (18) als 2/2-Wege-Auslassventil (21) ausgebildet ist.

15. Elektropneumatisches Anhängerversorgungsmodul (1) nach Anspruch 14, wobei das 2/2-Wege-Auslassventil (21) einen mit der Hauptventileinheit (8) verbundenen ersten 2/2-WegeAuslassventilanschluss (21.1) und einen mit einer Entlüftung (5) verbundenen zweiten 2/2-Wege-Auslassventilanschluss (21.2) aufweist.

16. Elektropneumatisches Anhängerversorgungsmodul (1) nach Anspruch 7, wobei das Auslassventil (18) als 3/2-Wege-Auslassventil (24) ausgebildet ist.

17. Elektropneumatisches Anhängerversorgungsmodul (1) nach Anspruch 16, wobei 3/2-Wege-Auslassventil (24) einen mit einer Entlüftung (5) verbundenen ersten 3/2-Wege-Auslassventilanschluss (24.1), einen mit der Hauptventileinheit (8) verbundenen zweiten 3/2-Wege-Auslassventilanschluss (24.2) und einen mit dem Anhängerversorgungsanschluss (6) verbundenen dritten 3/2-Wege-Auslassventilanschluss (24.3) aufweist.

18. Elektropneumatisches Anhängerversorgungsmodul (1) nach Anspruch 11 und 17 oder 13 und 15, wobei der zweite 2/2-Wege-Einlassventilanschluss (20.2) oder der zweite 3/2-Wege-Einlassventilanschluss (22.2) und der zweite 3/2-Wege-Auslassventilanschluss (24.2) oder der erster 2/2-Wege-Auslassventilanschluss (21.1) mit einer gemeinsamen Steuerleitung (26) verbunden sind, die ihrerseits mit der Hauptventileinheit (8) verbunden ist, um sowohl den ersten als auch den zweiten Steuerdruck (p1, p2) an der Hauptventileinheit (8) auszusteuern.

19. Elektropneumatisches Anhängerversorgungsmodul (1) nach einem der vorstehenden Ansprüche, aufweisend eine elektronische Steuereinheit (ECU) mit einem elektrischen Anschluss (40) zum Empfangen von Anhängerkopplungssignalen (SA) und/oder zum Bereitstellen entsprechender Schaltsignale (S1, S2) wenigstens an die Vorsteuereinheit (10).

20. Elektropneumatisches Anhängerversorgungsmodul (1) nach einem der Ansprüche, aufweisend einen Drucksensor (42), der dazu vorgesehen ist, den Versorgungsdruck (pA) zu erfassen und ein entsprechendes Drucksignal (SD) bereitzustellen.

21. Elektropneumatisches Anhängerversorgungsmodul (1) nach Anspruch 20, wobei das Drucksignal (SD) für eine elektropneumatische Anhängererkennung und/oder einer Plausibilisierung einer weiteren Anhängererkennung vorgesehen ist.

22. Elektropneumatisches Feststellbremsmodul (100), mit
einer Feststellbremseinheit (102),
wenigstens einem Federspeicheranschluss (104) zum Anschließen wenigstens eines Federspeicherbremszylinders (105), und
einem elektropneumatisches Anhängerversorgungsmodul (1) nach einem der vorstehenden Ansprüche,
wobei die Feststellbremseinheit (102) Vorratsdruck (pV) von dem Vorratsanschluss (2) empfängt und mit
einer Anhängersteuereinheit (106) mit einem Anhängersteueranschluss (108) zum Aussteuern eines Anhängersteuerdrucks (pS), der dazu vorgesehen ist ein Betätigen von Betriebsbremsen des Anhängerwagens zu bewirken,
wobei die Anhängersteuereinheit (106) Vorratsdruck (pV) von dem Vorratsanschluss (2) empfängt sowie den Versorgungsdruck (pA) als dritten Steuerdruck (p3) empfängt.

## Claims

1. An electropneumatic trailer supply module (1) for an electropneumatic parking brake system for commercial vehicles, in particular motor vehicle/trailer combinations, the electropneumatic trailer supply module comprising:
a reserve connection (2) for connecting a compressed air reserve (3, 4),
a trailer supply connection (6) for delivering a supply pressure (pA) for a trailer vehicle,
a pneumatically controlled main valve unit (8) for providing the supply pressure (pA) at the trailer supply connection (6), and
an electropneumatic pilot control unit (10) for outputting at least a first control pressure (p1) at the pneumatically controlled main valve unit (8), wherein when the first control pressure (p1) exceeds a predefined first threshold value of the pneumatically controlled main valve unit (8), the supply pressure (pA) can be output at the trailer supply connection (6), and when the first control pressure (p1) falls below the predefined first threshold value of the pneumatically controlled main valve unit (8), the trailer supply connection (6) can be vented, and wherein the supply pressure (pA) output by the pneumatically controlled main valve unit (8) can be output as a second control pressure (p2) at the pneumatically controlled main valve unit (8), for the pneumatic maintenance of the output supply pressure (pA),
comprising a feedback line (12) provided to output the supply pressure (pA) output by the pneumatically controlled main valve unit (8) as the second control pressure (p2) at the pneumatically controlled main valve unit (8),
**characterized in that**
the feedback line (12) is connected to the electropneumatic pilot control unit (10), wherein the electropneumatic pilot control unit (10), in a currentless switching position, allows the second control pressure (p2) to be output at the pneumatically controlled main valve unit (8).

2. The electropneumatic trailer supply module (1) according to claim 1, wherein when the second control pressure (p2) exceeds a predefined second threshold value of the pneumatically controlled main valve unit (8), the switching position is maintained, and when the second control pressure (p2) falls below the predefined second threshold value of the pneumatically controlled main valve unit (8), the main valve unit (8) switches and the trailer supply connection (6) can be vented.

3. The electropneumatic trailer supply module (1) according to claim 1, wherein the feedback line (12) has a throttle (13).

4. The electropneumatic trailer supply module (1) according to claim 1, wherein the first and second control pressures (p1, p2) are assigned to a joint control area of the pneumatically controlled main valve unit (8).

5. The electropneumatic trailer supply module (1) according to any of the above claims, wherein the pneumatically controlled main valve unit (8) includes a main valve (14) configured as a 3/2-way valve, having a first main valve connection (14.1) connected to the reserve connection (2), a second main valve connection (14.2) connected to the trailer supply connection (6), a third main valve connection (14.3) connected to a venting device (5), and a first control connection (14.4) which is connected to the pilot control unit (10) and at which the first control pressure (p1) can be output.

6. The electropneumatic trailer supply module (1) according to claim 5, wherein the second control pressure (p2) can also be output at the first control connection (14.4), or the main valve (14) has a second control connection (14.5) at which the second control pressure (p2) can be output.

7. The electropneumatic trailer supply module (1) according to any of the above claims, wherein the electropneumatic pilot control unit (10) has an inlet valve (16) and an outlet valve (18).

8. The electropneumatic trailer supply module (1) according to claim 7, wherein the inlet valve (16) is assigned to an inlet circuit (17) and the outlet valve (18) is assigned to an outlet circuit (19), and wherein the inlet circuit (17) and the outlet circuit (19) are pneumatically connected.

9. The electropneumatic trailer supply module (1) according to claim 7, wherein the inlet valve (16) is assigned to an inlet circuit (17) and the outlet valve (18) is assigned to an outlet circuit (19), and wherein the inlet circuit (17) and the outlet circuit (19) are separate.

10. The electropneumatic trailer supply module (1) according to claim 7 or 8, wherein the inlet valve (16) is configured as a 2/2-way inlet valve (20).

11. The electropneumatic trailer supply module (1) according to claim 10, wherein the 2/2-way inlet valve (20) has a first 2/2-way inlet valve connection (20.1) connected to the reserve connection (2) and a second 2/2-way inlet valve connection (20.2) connected to the pneumatically controlled main valve unit (8).

12. The electropneumatic trailer supply module (1) according to claim 7, wherein the inlet valve (16) is configured as a 3/2-way valve (22).

13. The electropneumatic trailer supply module (1) according to claim 12, wherein the 3/2-way inlet valve (22) has a first 3/2-way inlet valve connection (22.1) connected to the reserve connection (2), a second 3/2-way inlet valve connection (22.2) connected to the main valve unit (8), and a third 3/2-way inlet valve connection (22.3) connected to a venting device (5).

14. The electropneumatic trailer supply module (1) according to claim 7, wherein the outlet valve (18) is configured as a 2/2-way outlet valve (21).

15. The electropneumatic trailer supply module (1) according to claim 14, wherein the 2/2-way outlet valve (21) has a first 2/2-way outlet valve connection (21.1) connected to the main valve unit (8) and a second 2/2-way outlet valve connection (21.2) connected to a venting device (5).

16. The electropneumatic trailer supply module (1) according to claim 7, wherein the outlet valve (18) is configured as a 3/2-way outlet valve (24).

17. The electropneumatic trailer supply module (1) according to claim 16, wherein the 3/2-way outlet valve (24) has a first 3/2-way outlet valve connection (24.1) connected to a venting device (5), a second 3/2-way outlet valve connection (24.2) connected to the main valve unit (8), and a third 3/2-way outlet valve connection (24.3) connected to the trailer supply connection (6).

18. The electropneumatic trailer supply module (1) according to claim 11 and 17 or 13 and 15, wherein the second 2/2-way inlet valve connection (20.2) or the second 3/2-way inlet valve connection (22.2) and the second 3/2-way outlet valve connection (24.2) or the first 2/2-way outlet valve connection (21.1) are connected to a joint control line (26) which in turn is connected to the main valve unit (8) so that both the first and the second control pressure (p1, p2) can be output at the main valve unit (8).

19. The electropneumatic trailer supply module (1) according to any of the above claims, having an electronic control unit (ECU) comprising an electrical connection (40) for receiving trailer coupling signals (SA) and/or for providing corresponding switching signals (S1, S2, S3) at least to the pilot control unit (10).

20. The electropneumatic trailer supply module (1) according to any of the claims, comprising a pressure sensor (42) provided to detect the supply pressure (pA) and to provide a corresponding pressure signal (SD).

21. The electropneumatic trailer supply module (1) according to claim 20, wherein the pressure signal (SD) is provided for electropneumatic trailer identification and/or plausibility checking of a further trailer identification.

22. An electropneumatic parking brake module (100), comprising:
a parking brake unit (102),
at least one spring accumulator connection (104) for connecting at least one spring brake cylinder (105), and
an electropneumatic trailer supply module (1) according to any of the above claims,
wherein the parking brake unit (102) receives reserve pressure (pV) from the reserve connection (2) and comprising
a trailer control unit (106) comprising a trailer control connection (108) for outputting a trailer control pressure (pS) which is provided to effect an actuation of service brakes of the trailer vehicle,
wherein the trailer control unit (106) receives reserve pressure (pV) from the reserve connection (2) and receives the supply pressure (pA) as a third control pressure (p3).

## Revendications

1. Module d'alimentation de remorque électropneumatique (1) pour un système de frein de stationnement électropneumatique pour véhicules utilitaires, en particulier pour combinaisons véhicule automobile-remorque, comportant
un raccord de réserve (2) pour le raccordement d'une réserve d'air comprimé (3, 4),
un raccord d'alimentation de remorque (6) pour la transmission d'une pression d'alimentation (pA) pour un véhicule formant remorque,
une unité à soupape principale à commande pneumatique (8) pour la fourniture de la pression d'alimentation (pA) au raccord d'alimentation de remorque (6), et
une unité de pilotage électropneumatique (10) pour la commande d'au moins une première pression de commande (p1) au niveau de l'unité à soupape principale à commande pneumatique (8), dans lequel la pression d'alimentation (pA) peut être commandée au niveau du raccord d'alimentation de remorque (6) lorsque la première pression de commande (p1) franchit une première valeur seuil prédéfinie de l'unité à soupape principale à commande pneumatique (8), et l'air du raccord d'alimentation de remorque (6) peut être évacué lorsque la première pression de commande (p1) n'atteint pas la première valeur seuil prédéfinie de l'unité à soupape principale à commande pneumatique (8), et dans lequel la pression d'alimentation (pA) commandée par l'unité à soupape principale à commande pneumatique (8) peut être commandée en tant que deuxième pression de commande (p2) au niveau de l'unité à soupape principale à commande pneumatique (8) pour le maintien pneumatique de la pression d'alimentation (pA) commandée,
présentant une conduite de retour (12) prévue pour commander la pression d'alimentation (pA) commandée par l'unité à soupape principale à commande pneumatique (8) en tant que deuxième pression de commande (p2) au niveau de l'unité à soupape principale à commande pneumatique (8),
**caractérisé en ce que**
la conduite de retour (12) est raccordée à l'unité de pilotage électropneumatique (10), dans lequel l'unité de pilotage électropneumatique (10) permet, dans une position de commutation sans courant, la commande de la deuxième pression de commande (p2) au niveau de l'unité à soupape principale à commande pneumatique (8).

2. Module d'alimentation de remorque électropneumatique (1) selon la revendication 1, dans lequel la position de commutation est maintenue lorsque la deuxième pression de commande (p2) franchit une seconde valeur seuil prédéfinie de l'unité à soupape principale à commande pneumatique (8), et l'unité à soupape principale (8) commute lorsque la deuxième pression de commande (p2) n'atteint pas la seconde valeur seuil prédéfinie de l'unité à soupape principale à commande pneumatique (8), et l'air du raccord d'alimentation de remorque (6) peut être évacué.

3. Module d'alimentation de remorque électropneumatique (1) selon la revendication 1, dans lequel la conduite de retour (12) présente un étrangleur (13).

4. Module d'alimentation de remorque électropneumatique (1) selon la revendication 1, dans lequel la première et la deuxième pression de commande (p1, p2) sont associées à une surface de commande commune de l'unité à soupape principale à commande pneumatique (8).

5. Module d'alimentation de remorque électropneumatique (1) selon l'une des revendications précédentes, dans lequel l'unité à soupape principale à commande pneumatique (8) présente une soupape principale (14) réalisée sous forme de soupape à 3/2 voies, comportant un premier raccord de soupape principale (14.1) raccordé au raccord de réserve (2), un deuxième raccord de soupape principale (14.2) raccordé au raccord d'alimentation de remorque (6), un troisième raccord de soupape principale (14.3) raccordé à une évacuation d'air (5) et un premier raccord de commande (14.4) raccordé à l'unité de pilotage (10), premier raccord de commande au niveau duquel la première pression de commande (p1) peut être commandée.

6. Module d'alimentation de remorque électropneumatique (1) selon la revendication 5, dans lequel la deuxième pression de commande (p2) peut également être commandée au niveau du premier raccord de commande (14.4), ou la soupape principale (14) présente un second raccord de commande (14.5) au niveau duquel la deuxième pression de commande (p2) peut être réglée.

7. Module d'alimentation de remorque électropneumatique (1) selon l'une des revendications précédentes, dans lequel l'unité de pilotage électropneumatique (10) présente une soupape d'admission (16) et une soupape d'échappement (18).

8. Module d'alimentation de remorque électropneumatique (1) selon la revendication 7, dans lequel la soupape d'admission (16) est associée à un circuit d'admission (17) et la soupape d'échappement (18) est associée à un circuit d'échappement (19), et dans lequel le circuit d'admission (17) et le circuit d'échappement (19) sont raccordés pneumatiquement.

9. Module d'alimentation de remorque électropneumatique (1) selon la revendication 7, dans lequel la soupape d'admission (16) est associée à un circuit d'admission (17) et la soupape d'échappement (18) est associée à un circuit d'échappement (19), et dans lequel le circuit d'admission (17) et le circuit d'échappement (19) sont séparés.

10. Module d'alimentation de remorque électropneumatique (1) selon la revendication 7 ou 8, dans lequel la soupape d'admission (16) est réalisée sous forme de soupape d'admission à 2/2 voies (20).

11. Module d'alimentation de remorque électropneumatique (1) selon la revendication 10, dans lequel la soupape d'admission à 2/2 voies (20) présente un premier raccord de soupape d'admission à 2/2 voies (20.1) raccordé au raccord de réserve (2) et un second raccord de soupape d'admission à 2/2 voies (20.2) raccordé à l'unité à soupape principale à commande pneumatique (8).

12. Module d'alimentation de remorque électropneumatique (1) selon la revendication 7, dans lequel la soupape d'admission (16) est réalisée sous forme de soupape d'admission à 3/2 voies (22).

13. Module d'alimentation de remorque électropneumatique (1) selon la revendication 12, dans lequel la soupape d'admission à 3/2 voies (22) présente un premier raccord de soupape d'admission à 3/2 voies (22.1) raccordé au raccord de réserve (2), un deuxième raccord de soupape d'admission à 3/2 voies (22.2) raccordé à l'unité à soupape principale (8) et un troisième raccord de soupape d'admission à 3/2 voies (22.3) raccordé à une évacuation d'air (5).

14. Module d'alimentation de remorque électropneumatique (1) selon la revendication 7, dans lequel la soupape d'échappement (18) est réalisée sous forme de soupape d'échappement à 2/2 voies (21).

15. Module d'alimentation de remorque électropneumatique (1) selon la revendication 14, dans lequel la soupape d'échappement à 2/2 voies (21) présente un premier raccord de soupape d'échappement à 2/2 voies (21.1) raccordé à l'unité à soupape principale (8) et un second raccord de soupape d'échappement à 2/2 voies (21.2) raccordé à une évacuation d'air (5).

16. Module d'alimentation de remorque électropneumatique (1) selon la revendication 7, dans lequel la soupape d'échappement (18) est réalisée sous forme de soupape d'échappement à 3/2 voies (24).

17. Module d'alimentation de remorque électropneumatique (1) selon la revendication 16, dans lequel la soupape d'échappement à 3/2 voies (24) présente un premier raccord de soupape d'échappement à 3/2 voies (24.1) raccordé à une évacuation d'air (5), un deuxième raccord de soupape d'échappement à 3/2 voies (24.2) raccordé à l'unité à soupape principale (8) et un troisième raccord de soupape d'échappement à 3/2 voies (24.3) raccordé au raccord d'alimentation de remorque (6).

18. Module d'alimentation de remorque électropneumatique (1) selon les revendications 11 et 17 ou 13 et 15, dans lequel le second raccord de soupape d'admission à 2/2 voies (20.2) ou le deuxième raccord de soupape d'admission à 3/2 voies (22.2) et le deuxième raccord de soupape d'échappement à 3/2 voies (24.2) ou le premier raccord de soupape d'échappement à 2/2 voies (21.1) sont raccordés à une conduite de commande (26) commune qui est elle-même raccordée à l'unité à soupape principale (8) afin de commander à la fois la première et la deuxième pression de commande (p1, p2) au niveau de l'unité à soupape principale (8).

19. Module d'alimentation de remorque électropneumatique (1) selon l'une des revendications précédentes, présentant une unité de commande électrique (ECU) comportant un branchement électrique (40) pour la réception de signaux d'accouplement de remorque (SA) et/ou pour la fourniture de signaux de commutation (S1, S2) correspondants au moins à l'unité de pilotage (10).

20. Module d'alimentation de remorque électropneumatique (1) selon l'une des revendications précédentes, présentant un capteur de pression (42) prévu pour détecter la pression d'alimentation (pA) et pour fournir un signal de pression (SD) correspondant.

21. Module d'alimentation de remorque électropneumatique (1) selon la revendication 20, dans lequel le signal de pression (SD) est prévu pour une reconnaissance de remorque électropneumatique et/ou un contrôle de plausibilité d'une reconnaissance de remorque supplémentaire.

22. Module de frein de stationnement électropneumatique (100), comportant
une unité de frein de stationnement (102),
au moins un raccord d'accumulateur à ressort (104) pour le raccordement d'au moins un cylindre de frein à accumulateur à ressort (105), et
un module d'alimentation de remorque électropneumatique (1) selon l'une des revendications précédentes,
dans lequel l'unité de frein de stationnement (102) reçoit une pression de réserve (pV) depuis le raccord de réserve (2), et comportant
une unité de commande de remorque (106) comportant un raccord de commande de remorque (108) pour la commande d'une pression de commande de remorque (pS) prévue pour provoquer un actionnement des freins de service du véhicule formant remorque,
dans lequel l'unité de commande de remorque (106) reçoit une pression de réserve (pV) depuis le raccord de réserve (2) et reçoit la pression d'alimentation (pA) en tant que troisième pression de commande (p3).
